(19) **Europäisches Patentamt / European Patent Office / Office européen des brevets**

(11) **EP 3 410 862 B1**

(12) **EUROPEAN PATENT SPECIFICATION**

(45) Date of publication and mention of the grant of the patent:
**25.08.2021  Bulletin 2021/34**

(51) Int Cl.:
**B32B 7/02** (2019.01)       **B32B 1/08** (2006.01)
**A22C 13/00** (2006.01)       **A23L 13/60** (2016.01)
**A23B 4/044** (2006.01)

(21) Application number: **17747859.1**

(22) Date of filing: **02.02.2017**

(86) International application number:
**PCT/RU2017/000052**

(87) International publication number:
**WO 2017/135847 (10.08.2017 Gazette 2017/32)**

(54) **MULTILAYER CASING FOR SMOKING AND STORAGE OF FOOD PRODUCTS, AND SMOKED FOOD PRODUCT MADE THEREIN**

MEHRLAGIGE HÜLLE ZUM RÄUCHERN UND LAGERN VON NAHRUNGSMITTELN UND DARIN HERGESTELLTES GERÄUCHERTES NAHRUNGSMITTELPRODUKT

ENVELOPPE MULTICOUCHE DE FUMAGE ET DE STOCKAGE DE PRODUITS ALIMENTAIRES, ET PRODUIT ALIMENTAIRE FUMÉ PRÉPARÉ DEDANS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.02.2016  RU 2016103754**

(43) Date of publication of application:
**12.12.2018  Bulletin 2018/50**

(73) Proprietor: **Obschestvo s Ogranichennoi Otvetstvennostyu "Proizvodstvenno-Kommercheskaya Firma "Atlantis-Pak"**
**Aksayski rayon, Rostovskaya obl., 346703 (RU)**

(72) Inventors:
• **GOLYANSKIY, Boris Vladimirovich**
  **Rostov-na-Donu 344029 (RU)**
• **VERIN, Sergey Vladimirovich**
  **Rostov-na-Donu 344010 (RU)**

(74) Representative: **Anohins, Vladimirs et al**
**Agency Tria Robit**
**P.O. Box 22**
**1010 Riga (LV)**

(56) References cited:
EP-A1- 0 797 918        DE-A1- 10 320 327
RU-U1- 135 232          US-A1- 2005 112 247
US-A1- 2011 300 273     US-A1- 2012 003 361

**Description**

**Field of the invention**

The present invention relates to a multilayer casing, which allows of effective hot smoke treatment of foods encased therein, and the foods can receive organoleptic characteristics of smoked foods prepared in casing conventionally used for smoking, and which allows of the storage of the foods in the same casing, providing low weight loss and effective retention of smoke flavor. In some embodiments the invented casing can guarantee minimal rate of oxidation of its content by atmosphere oxygen. This casing is especially suitable for cooking and further storage of smoked foods that are intended for long shelf life, such as sausages, frankfurters, Vienna sausages, hams or processed cheeses.

**Background of the invention**

To prepare smoked foods the water vapor- and smoke-permeable casings based on livestock guts (natural casings), collagen of cattle hide split, non-reinforced or reinforced viscose are conventionally used. They allow of achieving customary organoleptic characteristics of smoked foods packed therein in process of smoking. These characteristics include in particular typical dense and dark-colored own skin or crust that is partly caused by evaporation through the casings of certain water portion out of surface layer of the food.

However production processes for such casings are usually low-output, highly water-consuming and not irreproachable environmentally, because they require the use of such toxic chemicals as formaldehyde, carbon bisulphide and the similar. Therefore smokable casings based on thermoplastic synthetic polymers have been developed intensively for a few last decades.

European patent No0139888 (B1), Publ. Date 25.11.1987, discloses a method for preparing smoked foods in casings of pure polyamide (PA 6 and PA 66). The method comprises smoke treatment of sausage in high humidity environment. Nylon casings can transmit aromas and coloring components of smoke better than films made of polyvinylidene chloride (PVdC) or polyethylene terephthalate (PET). Nevertheless result of smoking for sausages achieved at even severer conditions (by process duration and temperature) of smoke and thermal treatment in these casings is still considerably poorer than that in casings, conventionally used for smoking, such as, for instance, collagen-based ones. So, surface coloration of the smoked food under nylon casings is far paler (yellow-goldish), and the own skin is far less observable than in case collagen-based casing is used. The cause is that polyamide casings are much less permeable to water vapor than the conventional smokable casings, when subjected to hot smoking. From the Examples of EP No0139888 one can conclude, that a nylon casing can provide weight loss due to water evaporation during a heat treatment (that is performed at higher temperature and for longer time) about in four or more times less in comparison with that of the collagen-based casing. On the other hand, casings made of pure polyamide or of polyamides blends exhibit poor moisture-barrier characteristics in the storage conditions, so that food products, packed in such casings, furthermore quite rapidly lose moisture and specific smoke flavor.

Nevertheless, rather recently the market of packaging materials has seen the appearance of melt-extruded films based on the mentioned polyamides, but significantly more permeable to water vapor and smoke and therefore suitable for use as casings for smoked sausages and frankfurters.

Smoke- and water-vapor-permeable films (sausage casings) based on polyamide and comprising up to 50 wt. % of hydrophilic compounds that can form in polyamide matrix a highly dispersed phase was disclosed in patent RU No2182107, Publ. Date 10.05.02. In particular water-soluble polymers such as homopolymers and/or copolymers of vinylpyrrolidone, vinyl alcohol, alkyl oxazoline, alkylene glycol, acrylamide, alkylene oxide, acrylic and methacrylic acids, maleic anhydride, vinyl ethers, vinyl esters as well as cellulose ethers can be used as the mentioned hydrophilic compounds. Casings of PA 6/66 and polyvinyl alcohol (hereinafter PVA) blends in the sausage heat treatment conditions can transmit moisture far faster than above nylon films (level of weight losses of sausages paced therein is about 2-2.5 times higher than that of casing based on PA 6/66, the most moisture permeable among commercial polyamides). Besides, being dry, such film has gas-barrier characteristics enhanced even against a nylon casing.

Patent US No8012552, Publ. Date 06.09.2011, discloses a smokable sausage casing comprising 15-85% of PA 6 and/or PA 6/66 and 15-85% of one or more of hydrophilic polymers, comprising blocks of PA 6 and blocks of polyethylene glycol (PEG). This casing is characterized by thickness of 15-45 $\mu$m and with the value of water vapor transmission rate, measured according to ASTM E96 method BW (the measure is accomplished at 23°C provided a dish is turned upside-down so the water is in contact with the test film), is not less than 400 g/(m$^2$ 24 hours).

At last, German Patent No10323417, Publ. Date 16.09.2004, discloses flat or tubular film or casing for sausages and other meat products, comprising 40-80% of polyamide, 5-40% PVA and 20-30% of block-copolymer of polyamide and aliphatic polyether. Such casing can be single-layer or multilayer; however the document comprises no reference to a layer with composition differing from the abovementioned one. Hence in the multilayer embodiment all layers of the film should be in line with above claimed limits of composition. The casing has of water vapor transmission rate (hereinafter also referred to as WVTR) not lower than 1000 g/(m$^2$ 24 hours) and by this characteristic it approaches cellulose casings.

Nevertheless all prior art smokable casings readily transmit gases, water vapor and aromas not only in the smoking conditions, but also at lower temperatures i.e. during storage of foods packed therein. Consequently these foods, unless they are additionally repacked in suitable barrier package, usually rapidly become over-dried and lose their specific smoke flavor. Also lipids present therein turn yellow and rancid because of penetration of atmospheric oxygen through a casing. The worst barrier characteristic are typical for casings, traditionally used for smoking, however films and casings based on thermoplastic polymers also cannot provide sufficiently low drying rate of processed foods encased therein, for instance smoked sausages, in their storage environment.

Meanwhile for effective retention of moisture inside of the casing content, particularly of sausages and cheeses, and for its protection from oxidative damage can be provided by multilayer casings or films made of thermoplastic synthetic polymers, mostly of polyamides and polyolefins. Such films usually exhibit outstanding mechanical properties and already have long been widely used as packaging materials.

A multilayer tubular packaging material, used mostly as a casing for non-smoked sausages and having enhanced barrier characteristics particularly to water vapor and oxygen is disclosed in patent US No4243074, Publ. Date 06.01.1981. This packaging material necessarily has at least two layers, and the former mainly comprises linear polyamide or a blend of polyamide and polyethylene, and the latter is composed of a blend of linear polyamide and 2 to 40% of hydrophilic substances, for example, polyvinyl alcohol. Besides, it can have additional internal layer of the tube that is a layer made of heat-sealable material, for instance, polyethylene. However this packaging material has no layer, comprising functionalized (co)polymer and promoting adhesion to polyamide-containing layers. In those embodiments, where packaging material has heat sealable (polyethylene) layer, it is bonded with the layer of a blend of linear polyamide and of hydrophilic substances through the layer made of a blend of polyamide and polyethylene taken in almost equal weight parts.

It should be noted, that in those embodiments of the packaging material, where sealable layer is absent, the packaging material has not moisture barrier characteristics need for sausage casings, because neither polyamide, nor its blends with polyethylene has enough low water vapor (or, in other words, moisture) permeability. But if this polyethylene-based sealable layer is present, the packaging material is also hardly suitable as a sausage casing, because polyolefins has poor adhesion to meat emulsion that is not enough to avoid of developing of so called 'purge' or 'cook-out', i.e. formation of 'pockets' with liquid or gel between the casing and the emulsion during cooking.

The mentioned drawbacks are eliminated in casings and films for cook-in bags having inner layer of the tube made of polyamide or modified, particularly functionalized, polyolefin, and core moisture barrier layers based on functionalized and/or non-functionalized polyolefin, disclosed correspondingly, for instance, in Patents US No5185189, Publ. Date 09.02.1993, and No5837358, Publ. Date 07.11.1998. These films comprise core layer or layers of pure functionalized polyolefin or of a blend thereof with polyolefin, the layer(s) having good adhesive capacity to polar polymers particularly to polyamide; the layer, which provides bonding between layers of difficult chemical nature or which per se provides moisture barrier, being between two layers of polar polymers. Such films have pronounced barrier characteristics to oxygen and moisture but, certainly, they cannot allow effective smoking of foods encased therein.

As can be seen from the above discussion, food casings and packaging films used today are able to provide for not more than one of said functions, i.e. they can be either moisture- and gas-insulating (of barrier type), or smokable, or simultaneously of low-barrier and poorly smokable. The latter case can be exemplified by above casings, composed of one layer of polyamide according to EP Patent No0139888 and two-layer films according to Patent US No4243074.

Usually to prolong shelf life of smoked sausages or cheeses, cooked in permeable casings of any type (including traditional and synthetic sorts), secondary packaging is used. However, if one uses as said secondary packaging a moisture-insulating but permeable for oxygen low-cost polyolefin film, a problem arises: moisture derived from food content accumulates between primary and secondary packaging, so even oxygen-barrier casings based on polyamide are saturated with water throughout their thickness and lose oxygen-retaining ability, therefore the packaging in whole becomes gas-permeable. On the other hand, the use as the secondary packaging an expensive multilayer film, providing both moisture- and oxygen barrier, makes the combined packaging much more costly.

Attempts to develop a casing for smoking and further storing of protein products therein also had been made earlier.

The closest to present invention casing is disclosed in European patent No0797918, Publ. Date 01.10.1997, and the casing is heat-shrinkable tubular multilayer film, comprising at least one layer of polyamide and at least one layer of modified polyolefin, having adhesive capacity to this polyamide and a thickness of 1-25 $\mu$m. The modified polyolefin is obtained by grafting a functional monomer, such as maleic anhydride, onto non-modified polyolefin, selected from a list, comprising polyethylenes high and low density, polypropylene, polybutene, etc. Apart from these bonded layers of polyamide and modified polyolefin, casing can comprise a layer of non-modified polyolefin, also selected from above list, which is bonded to the layer of modified polyolefin. The disclosed embodiments of the invention are characterized by low values of water vapor transmission rate at temperatures close to room temperature (40°C) and low weight loss during storing for 10 days at 18°C, that is very beneficial in point of preservation of processed foods for the period of their shipping, distribution and storage.

However water vapor permeability level of casings according to this patent even at temperatures of hot smoke treatment and drying is still extremely low, which is manifested in low values of weight loss of sausages in casing during their production process that are 60-100 times lower, than in case of a cellulose casing use. Under such circumstances the formation of own dark-colored and dense skin on surface of a smoked sausage or cheese for any reasonable thermal (smoke) processing time is practically impossible. As regards other effects of smoking, such as specific aroma, flavour and color, according to illustrating examples in the best embodiments of the invention, they can achieve only level of those of nylon casings that is however much thicker than invented one. Meanwhile, imparting same or even more intensive smoke flavor, flavour and color to sausage meat can be easily achieved by direct adding commercial smoke flavourants and dark food colorants into the meat emulsion. Concerning high level of preservation of these foods during shipping, distribution and storage, it can be completely provided by commercial multilayer casings with far better barrier characteristics.

Consumers, nevertheless, would prefer a sausage or a cheese having all features of smoked food product including typical surface skin, placed in such casing that can provide keeping of their weight during shipping, distribution and storage at better level than a casing out of pure (co)polyamide. This would guarantee that the food product dries by more than 16 times slower than that packed into fiber-reinforced cellulose casing. Such ratio between drying velocity of food in fiber-reinforced cellulose casing and that of food in a nylon casing is disclosed in patent EP No0797918.

Patent document US 2005/112247 A1 discloses a casing for smoking and storing of food products, in particular of sausages, comprising a thermoplastic polyamide containing layer with the thermoplastic (co)polyamide (a) being PA 12, PA 6, or PA 6/66, and with the second polymer being a block copolymer of an aliphatic polyamide and an aliphatic polyether, having repeating units comprising two carbon atoms, optionally in combination with starch. The casing may generally have a thickness of 25 to 200 pm; in the examples, values are at least 52 pm, with water vapour transmission rates at 23°C and 85% relative humidity well below 100 g/(m$^2$·d). It is mentioned that the casing may comprise further layers such as layers based on a polyamide or layers based on a polyolefin, and may comprise adhesive layers containing adhesion promoters such as functionalized polyolefins, for example grafted with maleic anhydride, said adhesive layers typically having a thickness of 1 to 5 pm.

Similar casing is disclosed in patent document DE 10320327 A1, albeit with a water-soluble polymer such as polyvinyl alcohol being employed instead of or in addition to a block copolymer of an aliphatic polyamide and an aliphatic polyether. In the examples, several casings feature a thickness of less than 50 pm, and water vapour transmission rates at 23°C and 85% relative humidity are at least 100 g/(m$^2$·d).

Patent document US 2011/300273 A1 discloses another casing for smoking and storing of food products, in particular of sausages, again comprising a thermoplastic polyamide-containing layer with the thermoplastic (co)polyamide (a) being PA 6, PA 66, PA 12, or PA 6/66, and with the second polymer (b) being an ionomer predominantly neutralized with potassium, which apparently is highly permeable to water vapour. Said casing may further comprise a layer based on a polyamide alone and/or a layer based on an ionomer alone. The casing generally has a thickness of 6.4 to 130 pm, preferably of 13 to 76 pm.

Patent document US 2012/003361 A1 also discloses a casing for smoking and storing of food products such as sausages comprising a thermoplastic polyamide containing layer. In a first embodiment, a single layer comprises a polyamide such as PA 6 or PA 6/66, a non-crosslinked polyvinylpyrrolidone and a crosslinked polyvinylpyrrolidone. In a second embodiment, one layer comprises polyamide and the non-crosslinked polyvinylpyrrolidone, and another layer comprises polyamide and the crosslinked polyvinylpyrrolidone. In either case, an additional layer may be provided, which may comprise a functionalized polyolefin, such as a copolymer of ethylene and (meth)acrylic acid.

Hence, up to present time there is still the need for a multilayer casing for food products, subjected to smocking, the casing able to effective transmission of not only smoke components but also of water vapor at the conditions of smoking process, and able to effective resistance to pervaporation of water and aromas out of food product packed therein during their shipping, distribution and storage. This means such casing should have the water vapor- and smoke-permeability characterized by the stronger temperature dependence than any food casing known before.

Besides, it is quite desirable that such casing would have high barrier to oxygen in an interim storage or a refrigerator environment.

Therefore, the object of present invention, in its first aspect is a casing for food products, subjected to smocking, the casing able to effective transmission of not only smoke components but also of water vapor at the environment of smoking chamber, and able to effective resistance to moisture and aromas pervaporation out of food product packed therein during their shipping, distribution and storage.

The second object of present invention is a casing for effective smoking and storage of food products that can be produced of low-cost and commercially available materials.

One more object in other aspect of present invention is a smocked food product in the invented casing wherein, whereas this smoked food product can be sausage, frankfurter, Vienna sausage, ham or processed cheese.

## Description of the invention

### Terms and definitions

Hereinafter, including Claims, unless otherwise mentioned, while a composition or a formulation is described the symbol '%' means weight percentage, based on total weight of a composition or mixture (blend).

Also, hereinafter a word comprising a parenthesized prefix is used to denote a concept that simultaneously comprises concepts denoted by this word with this prefix and without it. For instance the word (co)polymer means simultaneously a polymer (homopolymer) and copolymer. Besides, the term 'copolymer', as well as relative terms, for instance, 'copolyamide' and 'copolyolefin' hereinafter means a product of copolymerization of two or more monomers. On the other hanα, abbreviation 'PA' can relate both to homopolyamide, and to copolyamide, for example, PA 6 and PA 6/66.

The terms 'polymer' and 'polymeric' can be unequivocally used contextually both in the restricted sense, as concerning to homopolymers, and in the broad sense, as concerning generally to high molecular weight substances, as well as their molecular fragments (for example, in context 'polymeric chain' or 'polymeric segment').

Hereinafter the term 'polymeric material' should be understood as either 'pure' (i.e. comprising no additive) (co)polymer, or a composition, comprising this (co)polymer in predominant amounts.

The term 'functionalized polymer' implies non-polar (co)polymer, having functional groups, able to react with at least one of groups, such as $-NH_2$, -COOH and -OH, thereby providing chemical bonding between this polymer and a polar polymers, comprising said groups (for example, PA, PVA and etc.). Being in a separate layer or in blend with non-polar polymers, such polymer promotes adhesion with layers of polar polymers, while corresponding polymers without such reactive groups have quite poor adhesion to polar polymers. Besides, such polymer, as a rule, exhibits good adhesive capacity to other non-polar polymers, preferably, with similar backbone chain, and therefore layer of such polymer can interlink layers of polar and non-polar polymers.

The term 'predominantly hydrocarbonic (co)polymer' should be understood as a (co)polymer, comprising predominant total molar percentage of unsaturated hydrocarbon monomer units, such as α-olefins, including ethylene, propylene and similar ones, as well as dienes, styrene etc. Hereinafter such hydrocarbonic polymer is abbreviated as 'HCP', and functionalized hydrocarbonic polymer is abbreviated as 'FHCP'.

The term 'soluble' shall mean a product (in particular, a polymer), at least 95% of the total mass of which transforms into a true or lyophilic colloidal solution while coming in contact with 50-fold excess of given solvent and at given conditions.

The terms 'water-soluble' and 'water insoluble' relate to behavior of polymers and other substances in water at 20°C.

The term 'highly permeable to water vapor (co)polymer' should be understood as (co)polymer, that is characterized by permeability coefficient in respect of water vapor, measured according to ASTM F-1770 at 37.8°C and relative humidity (RH) 100% that is not less than $3 \times 10^{-6}$ g/(m 24 hours Pa) (for 20-$\mu$m film out of such polymer WVTR $\geq$ 995 g/($m^2$ 24 hours). Such minimal value of water permeability coefficient belongs to, for instance, cellulose acetate propionate, a material for making a smokable film, disclosed in European patent No0920808, Publ. Date 09.06.1999. Water-soluble polymers due to their very high water-absorptive capacity (one of two factors of water permeability coefficient) also can be considered as highly permeable to water vapor (co)polymers.

A casing layer made of a polymer highly permeable to water vapor polymer or polymeric blend comprising thereof, also can be denoted as 'highly permeable to water vapor' or 'highly moisture permeable'.

The attributes relating to layers of the casing such as 'peripheral' or 'boundary' and 'core' or 'central' correspondingly mean that a layer has a surface, bordering with an environment, and that layer borders with other layers of the casings. The attributes relating to layers such as 'outer' or 'external' and 'inner' or 'internal' relate to peripheral layers tubular casings, adjacent to corresponding surface of a tube.

### Brief description of the invention

As a result of thorough and prolonged studies performed, it has surprisingly been found that the objects of this invention in one of its aspects are achieved by providing of casing for smoking and storage of food products, being a multilayer film, having

(i) at least one thermoplastic polyamide-containing layer (hereinafter also abbreviated as PA-L) and,

(ii) at least one adhesive layer (hereinafter also abbreviated as A-L), comprising functionalized predominantly hydrocarbonic (co)polymer, said functionalized predominantly hydrocarbonic (co)polymer comprising predominant total molar percentage of unsaturated hydrocarbon monomer units and having functional groups, able to react with at least one of groups, selected from primary amino group, carboxyl group and hydroxyl group,

wherein every of polyamide-containing layers is made of a composition comprising a) 5 to 95% of at least one (co)polyamide and b) 95 to 5% of at least one polymer, selected from the list, consisting of water-insoluble at 20 °C but highly permeable to water vapor thermoplastic (co)polymers selected from thermoplastic cellulose esters, block-copolymers of aliphatic (co)polyester and aliphatic (co)polyether, block-copolymers of polyurethane and aliphatic (co)polyether, wherein repeating units of aliphatic (co)ether block comprise 2 to 4 carbon atoms, and also blends thereof; and water-soluble at 20 °C (co)polymers selected from polyvinyl alcohol, polyvinylpyrrolidone, polyoxazoline, cellulose ethers, water-soluble starch, modified starch, dextrin, and also blends thereof, wherein said casing is characterized by the water vapor transmission rate, measured according to DIN 53122 at 23°C and RH 85%, which is not more than 100 g /(m$^2$ day) and water vapor transmission rate, measured by a method that is analogous to the 'Desiccant Method' according to ASTM E96, but accomplished at ambient RH 100% and at the temperature 80°C, which is not less than 4000 g /(m$^2$ day).

In other aspect of present invention the object is achieved by providing of smoked food product, prepared and stored in the invented casing, wherein this smoked food product is a sausage, frankfurter, Vienna sausage, ham or processed cheese.

The smokable casing according to present invention is distinguished with its ability to hold moisture of product packed therein at relatively low temperature. This ability obligatorily belongs to the casing at temperatures of refrigerator chamber (usually 6°C or low); in most cases it does at room temperature or even at higher temperatures, however near a peak temperature of the sausage or cheese while subj ected to heat treatment (drying and/or smoking) such ability necessarily should have disappeared.

The moisture holding ability at room temperature can be estimated by WVTR value, measured by any standard method at corresponding conditions, for instance, according to DIN 53122 at 23°C and RH 85%. A WVTR value for the invented casing at these conditions is not more than 100 g/(m$^2$ 24 hours).

At the same time, casing according to present invention is able to effective moisture transmission under the conditions of hot smoking, e.g., at 80°C. There is no standard method for measure of such characteristic. Therefore for a simulation of the invented casings behavior in process of smoking a test method, similar to the Desiccant Method according to ASTM E96, but accomplished in conditions, modeling conditions of the heat treatment (drying and/or smoking) of the sausage or cheese, can be used. The method comprises weighting of dish with known area of its mouth containing the desiccant $CaCl_2$, providing essentially zero humidity and sealed by attached test film and following placing of the dish into a chamber with RH 50% and temperature 38°C. In a certain time the dish is pull out of the chamber and weighted once more. The WVTR value is calculated on the basis of the dish weight change, area of the dish mouth closed by the test film, and the test time. The mentioned modification of the method requires the use of chamber maintaining RH 100% (air in equilibrium with distilled water) and temperature of 80°C. The WVTR value of the invented casings, measured at these conditions, is not less than 4000 g/(m$^2$ 24 hours). As seen from below, WVTR values measured at the same conditions for films made of common commercial (co)polyamides, such as PA 6 or PA 6/66 are significantly lower.

The claimed casing is distinguished by $W_{80}/W_6$ ratio, wherein $W_{80}$ is weight loss of sausage in this casing during a heat treatment, comprising drying at 80°C for 40 minutes and $W_6$ is weight loss of sausage in the same casing during storing at the temperature 6°C for 10 days; the ratio is preferably not less than 0.6, more preferably not less than 0.7 and most preferably not less than 0.8. Unlike the both of its members, the relation does not depend on size and geometry of sausage and therefore it can serve as a characteristic of casing. The examples below show that the invented casing excels all casings, known from prior art, by this characteristic.

Casing according to present invention usually comprises 2 to 7 layers and has total thickness 15 to 50 $\mu$m. In this context preferable thickness of the adhesive layer is 0.5-20 $\mu$m.

Preferable (co)polyamides of polyamide-containing layer are PA 46, PA 6, PA 66, PA 9, PA 12, PA 4/6, PA 46/6, PA 6/66, PA 6/66/12, and also blends thereof. Besides, (co)polyamides, predominantly comprising the units of the same aliphatic monomers, composing above listed (co)polyamides, but additionally having in their macromolecule not more than 15 wt.% of units derived from at least one of such alicyclic and/or aromatic monomers, as isophorone diamine, isophthalic acid, terephthalic acid, m-xylylenediamine and p-xylylenediamine, also can be used. All these (co)polyamides are commercially manufactured by the plurality of companies, for example, PA 46 is available from DSM N.V. (Netherlands) under Stanyl® family of trademarks. PA 6, PA 66 and PA 6/66 are available from BASF SE, Ube Industries, Ltd. (Germany), DSM (Netherlands) as Ultramid®, Nylon® and Akulon® correspondingly. Copolyamide (or rather, terpolyamide) 6/66/12 is available from Ube Industries, Ltd. (Germany) as Terpalex®. Copolyamide synthesized mostly from PA6 monomer (caprolactam) and at least one of above alicyclic and/or aromatic monomers, is commercially manufactured by, for example, companies: LanxessAktiengesellschaft (Germany) and EMS-Chemie (Switzerland) as Durethane®.

Non-polyamide components of the PA-L(s) are selected from water insoluble highly permeable to water vapor thermoplastic (co)polymers and water-soluble (co)polymers.

Polyester/aliphatic polyethers block-copolymers are produced commercially by DuPont de Nemours Company as Hytrel® and DSM Engineering Company as Arnitel® trademark.

Thermoplastic polyurethanes (TPU) with aliphatic (co)polyether blocks (mainly blocks of polytetrahydrofuran, hereinafter PTHF) are produced commercially, for instance, Lubrizol Corp. as Estane®.

Thermoplastic cellulose esters, including the cellulose acetate propionate used in European patent No0920808, are commercially sold, for example, by Eastman as Eastman® CA, Eastman® CAP and Eastman® CAB.

Water-soluble polymers amongst others can be selected in accordance with conditions of patent RU No2182107, i.e. from those able to form highly dispersed phase in polyamide.

The melt-(co)extruded PA-L(s) may also contain highly moisture-permeable polyamide polyether block copolymers (abbreviated as 'PEBA') as at least third constituent apart from PA and the listed non-polyamide components. Such block copolymers are produced commercially by, e.g., Arkema Inc. under 'Pebax®' family of trademarks.

If the PA-L comprises at least one water-soluble (co)polymer, its (their) content is preferably not more than 50% to ensure the desired mechanical properties of the casing.

Polyvinyl alcohols are understood as water-soluble products of full or partial saponification of polyvinylacetate. Various PVA types are produced, for example, by such companies as Kuraray Co., Ltd, Nippon Gohsei (Japan) and ChangChun Group (Taiwan) as Mowiol®, Gohsenol® and PVA correspondingly. PVA can be used for extrusion in the supplied form, as well as after its modification, as it is disclosed, for instance, in Patent RU No2469541, Publ. Date 20.12.2012.

Polyvinylpyrrolidone and water-soluble copolymers of vinylpyrrolidone (for instance, with vinylacetate) are produced, for instance, by BASF SE (Germany) as Kollidon®.

Polyoxazolines of various molecular weights are commercially sold by Polymer Chemistry Innovations Inc. (USA) as Aquazol®.

Thermoplastic methylcellulose, commercially sold by Dow Chemical Co. (USA) as Methocel® e.g. can be used as cellulose ether.

Starches, modified starches and dextrins are commercially sold by numerous suppliers.

The polyamide-containing layers, having high smoke and moisture permeability over the entire temperature range from storage temperature of the packed in the casing food product in refrigerating chamber up to temperature of drying and/or smoking thereof. Without limitation they can be made in accordance (not necessarily absolutely precise) with compositions of single-layer films, disclosed in above patent RU No2182107, German patent No10323417, Publ. Date 16.09.2004 or patent US No6764753, Publ. Date 20.07.2004, disclosed smokable films comprising a polyamide and a block polyetherester. These layers also can be mostly composed of a polyamide / cellulose ester blend, as disclosed in European patent No0920808. Besides, if the polyamide-containing layer is exposed to the tubular casing environment (outer layer) it can additionally comprise additives (coarse fillers), providing roughness and natural appearance of casings in concordance with German patent No10320327, Publ. Date 02.12.2004.

The summarized thickness of polyamide-containing layers is generally 40 to 98.5% of total thickness of the invented casings.

The functionalized polymer (FHCP), composing (optionally together with other components) the adhesive layer of the invented film, can be in particular made by modification, usually, by grafting onto HCP of one or more unsaturated functional monomers, such as unsaturated carbonyl acids, amides of unsaturated carbonyl acids, glycidyl esters of unsaturated carbonyl acids, unsaturated carboxylic acid anhydrides. These HCPs can be found among polyolefins, such as polyethylene of low density (hereinafter LDPE) made by high pressure polymerization, polyethylene of high density made by low pressure polymerization, linear copolymers of ethylene with $\alpha$-olefins comprising 3 to 12 carbon atoms, with predominant content of ethylene, copolymers of ethylene with predominant content of ethylene with at least one unsaturated monomer, selected from the list comprising vinylacetate, (meth)acrylic acid, (meth)acrylates (esters), as well as, stereoregular polypropylene, propylene copolymers with at least one olefin and, in addition, partly olefinic or non-olefinic hydrocarbonic (co)polymers, such as thermoplastic elastomers, for example, styrene-butadiene-styrene block-copolymers (SBS), styrene-isoprene-styrene block-copolymers (SIS), styrene-ethylene/butene-styrene block-copolymers (SEBS); rubbers, including natural or synthetic cis-polyisoprenes, synthetic polybutadienes with various fraction of trans- and cis-units, butadiene/styrene random copolymers, amorphous ethylene/propylene random copolymers, amorphous ethylene/propylene/diene random copolymers; as well as trans-polyisoprenes in form of natural or synthetic gutta percha.

Besides, functionalized polymer can be selected from products of copolymerization of olefins and/or other unsaturated hydrocarbons with one or more unsaturated functional monomers, such as unsaturated carbonyl acids, glycidyl esters of unsaturated carbonyl acids, unsaturated carboxylic acid anhydrides, plus, optionally, with such monomers as vinyl esters, esters of unsaturated carbonyl acids, amides of unsaturated carbonyl acids.

The adhesive layer of the casing according to present invention preferably comprises 15% or more of above functionalized predominantly hydrocarbonic (co)polymer or blend of several such (co)polymers.

In particular, the adhesive layer can be made of a pure functionalized predominantly hydrocarbonic polymer and comprise no other components.

In other embodiments, this layer comprises, apart from the functionalized predominantly hydrocarbonic (co)polymers, one or more other thermoplastic non-functionalized (co)polymers and/or one or more low molecular weight organic substances (hereinafter referred to as LMW) with the molecular weight lower than 10 kDa. Depending on functional unit percentage in FHCP molecule, different amounts of listed components can be added, but in order to avoid significant loss of the layer adhesiveness their total content should be not more than 85%.

HCP, above listed among those subjected to the grafting modification, resulting in FHCP, except those comprising units of (meth)acrylic acid and/or glycidyl (meth)acrylate, can be used as non-functionalized thermoplastic polymers in this layer. Partial replacement of FHCP by HCP is economically expedient, because HCPs are usually far cheaper than their grafted analogs.

Besides, one can also use thermoplastic heterochain (co)polymers with total molecular weight more than 10 kDa, comprising poly/oligomeric homopolymer chains of at least one such polymer as homopolymer of ethylene oxide or polyethylene oxide (in the marketplace these products are usually denoted as 'polyethylene glycol' or PEG, if their MW<60 kDa and as 'polyethylene oxide' or PEO, if MW>60 kDa), polytetrahydrofuran (also denoted as PTHF, poly-1.4-butylene glycol, poly-1.4-butane diol, or polytetramethylene glycol - PTMG), poly/oligo-ε-caprolactone (PCL).

Such heterochain (co)polymers can belong either to homopolymers of ethylene oxide, tetrahydrofuran (tetramethylene glycol) or ε-caprolactone, or to block-copolymers, comprising blocks of at least two from three listed homopolymers, or to block-copolymers, additionally comprising blocks of polyamides, polyesters or polyurethanes, such as, for example, those described above as highly moisture permeable thermoplastic block-copolymers as components of polyamide-containing layer and additionally PEBA, but in any case their molecular weight should be higher than 10 kDa.

Suitable LMWs as a component of adhesive layer can be found among hydrophobic water insoluble individual organic compounds with the molecular weight about 100 - 10000 Da or among blend thereof. It is desirable that such compounds have at least one linear hydrocarbonic chain comprising minimum 7 carbon atoms as a fragment of their molecules. It is also desirable that such compounds have boiling temperature at normal pressure higher than 230°C.

Such LMWs comprise normal or branched hydrocarbons (alkanes) with number of carbon atoms not less than 15, petroleum derived paraffin waxes, ozocerites, natural waxes, synthetic waxes, aliphatic alcohols with number of carbon atoms not less than 11, linear fatty acids with number of carbon atoms not less than 8, synthetic ester of fatty acids, synthetic amides of fatty acids, monoglycerides of fatty acids, diglycerides of fatty acids, triglycerides of fatty acids, including plant oils and animal fats, as well as any mixtures thereof.

Besides, LMWs can be selected among linear or slightly branched (co)oligomers with the molecular weight of less than 10 kDa, preferably from linear homo-oligomers such as PEG, PTHF or PCL, as well as of relatively low molecular weight block-(co)oligomers such as PTHF-PCL, or PTHF-PEG, or PCL-PEG with the molecular weight less than 10 kDa. Such (co)oligomers can be used individually, in a mixture with each other and/or in a mixture with above listed hydrophobic LMWs.

Making selections of the concrete components for adhesive layer one may take into account useful considerations stated below.

It is known that temperature dependence of moisture permeability coefficient *P* is described by Arrhenius Law:

$$P = e^{-\frac{E_p}{RT}},$$

wherein *R* is universal gas constant, *T* is absolute temperature, $E_p$ is activation energy of permeability, wherein $E_p = E_d + \Delta H_S$, wherein $E_d$ and $\Delta H_s$ are respectively, the activation energy of diffusion and the absorption enthalpy.

The $E_d$ value is connected with overcoming of energy barriers by a molecule of a diffusant ($H_2O$) moving through a material and hence it is always positive. The $E_d$ value is rather great for glassy polymers with 'frozen' chains. Meanwhile $\Delta H_S$ value is in essence, an energy gain of the same diffusant molecule in process of its transition from gas (or vapor) to condensed phase and therefore it is always negative. As the moisture absorption of hydrophobic polymers provides far less energy gain, than that of hydrophilic ones, the former are characterized by significantly higher $E_p$ value, and, consequently, *P* value rises faster with the temperature increase.

Therefore adhesive layer of invented film, providing it has suitable thickness, generally can be composed of any hydrophobic polymer. Nevertheless, to achieve the best results in the spirit of the invention objects, it is preferable that temperature dependence of moisture permeability of film in the range 6-80°C (hereinafter referred to as "the important temperature range" or "the important range") is stronger than that of Arrhenius law. In this context preferable matter of adhesive layer is characterized by at least partial melting in the important range of at least one of the crystalline phases, present therein, and it is desirable, that total content of its crystalline phases at 80°C is not more than 20% of their content at 6°C.

Crystals are known to make very little or no contribution in diffusion and absorption phenomena. This is the reason why, at the same temperatures, highly crystalline materials such as metals or ceramics are much less permeable, than polymers, having continuous amorphous phase with 'islets' of crystallites This also means that transformation of crystalline phase into amorphous one taking place during melting should be accompanied by dramatic $E_d$ value drop and the permeability jump.

The crystalline phases, melting within the important range, can be formed by one or more of above listed components of adhesive layer, i.e. FHCP, HCP, a heterochain polymer or LMW.

It should be taken into consideration, that widely used HCP the copolymers of olefins, for instance, of ethylene, are able, unlike homopolymers, to melt in the important range, but they are characterized by lower crystallinity degree than that of said homopolymers, and hence, also by not so sharp permeability jumps while they undergo melting. Therefore it is expedient to add into the formulation of this layer these hydrophobic organic low molecular weight substances, which can crystallize almost completely at temperatures lower than temperature of the food product heat treatment in the casing and comprise essentially no amorphous phase at the storage temperature, the phase that is present in polymers at all temperatures

Adding of such hydrophobic LMWs is even more expedient, if the polymeric basis of the adhesive layer is predominately composed of non-crystallizable polymers, for instance, of rubbers or block-copolymers comprising rubber blocks, such as, for instance, SBS. Butadiene rubbers and SBS-elastomers, depending on content of trans-butadiene units in their chains of polybutadiene block, in the important temperature range can be either semicrystalline, with melting points, typical for rubbers (up to 80°C) and for SBS (45-60°C), or essentially amorphous. It is useful in any case, but quite desirable in the latter one to add the hydrophobic LMW into the formulation of the adhesive layer. It is well known, that such substances, for instance, paraffin waxes, being introduced as additives into films made of thermoplastic elastomers, e.g. SBS (Patent US No5106677, Publ. Date 21.04.1992) and polyolefins (Patent US No5155160, Publ. Date 13.10.1992), can cause the significant decrease of their WVTR at room temperature or at lower temperatures.

LMW addition is desirable even if polymers composing the adhesive layer have relatively high crystallinity degree, and also form crystals, melting in an important temperature range. For instance, natural gutta percha or its synthetic analog, the trans-isoprene, that, unlike its cis-isomer, the isoprene rubber, are crystallizable with crystallinity degree up to 60% and with melting range of 64-74°C, can be referred to such polymers. So they are especially useful components of casings according to present invention.

Hydrophobic LMWs also are preferably selected among those melting within the important temperature range, for instance, among $C_5$-$C_{40}$ n-alkanes or $C_8$-$C_{24}$ saturated linear fatty acids or $C_{11}$-$C_{31}$ linear fatty alcohols.

If the adhesive layer is formed by coextrusion process, it is desirable that percentage of LMW present therein is 3 to 30%, preferably 5 to 25%. If the layer is applied on premade casing as a coating, this LMW percentage can also be in a range 30 to 85%.

In preferable embodiment of present invention, adhesive layer comprises polymers, composed of linear or slightly branched macromolecules (e.g. LDPE), and these polymers are conventional commercial products. If such polymers undergo melting in the important temperature range, thickness of adhesive layer can vary from 0.5 to 20 $\mu$m.

But if polymeric material, composing the adhesive layer, has a melting range located mainly at temperatures above 80°C, the layer preferably has minimal thickness, most preferably of 0.5-1.5 $\mu$m, to provide an acceptable level of permeability under the smoking conditions.

A melting range of crystalline phases present in this adhesive layer or in any other layer(s) can be estimated by differential scanning calorimetry (DSC) technique. It is also useful to take into account effects of probable miscibility, such as a temperature depression, due which a temperature region of crystalline phase existence can be far narrower, than it can be expected from simple superposition of separate melting ranges of the components.

DSC-measured melting peak temperature of the layer polymeric components is desirably not higher than 80°C; in this context a small part of polymer crystals can remain unmelted. The melting peak temperature of at least one of polymeric components can be higher than 80°C; however, in this case it is preferable that content such component does not exceed 20%.

Polymeric components, as a rule, comprise amorphous phase and have different crystallinity degree depending on their monomeric formulation and architecture of their chains, as well as a thermomechanical history of concrete sample. Besides, the crystallinity degree changes with temperature in rather broad temperature range (melting range). A melting range of a polymer is usually shifted into lower-temperature area upon admixing miscible low molecular weight substances. A weaker temperature depression is observed after addition of miscible polymers. On the other hand, admixture of even rather great amounts of miscible polymers has a little effect upon melting temperature of low molecular weight substances. In any case it is desirable to compose a formulation of adhesive layer so, that residual total content of crystalline phase therein at 80°C is not more than 20% from this content at 6°C. Within this framework, the most preferable percentage of crystalline phase in that adhesive layer is in a range from 10 to 80% at 6°C, and is equal 0% at 80°C.

Low molecular weight components of adhesive layer material, if any, usually melt below than 80°C. If such substance is characterized by high purity, it melts in very narrow temperature range. The melting range of two or more substances miscible in liquid state can be rather broad. If this is the case, a small fraction of such mixture, generally not more than 10%, and preferably not more than 5%, can melt below 6°C.

In a similar manner the (co)polymers of alkyleneoxides and poly-ε-caprolactone, as well as block-copolymers thereof as a component of adhesive layer are preferably selected so, that they undergo phase transition of melting within the important temperature range from 6 to 80 °C. For instance, homopolymers of ethylene glycol (polyethylene oxide) with the molecular weight not less than 0.6 kDa ($T_m$ is ranged from 20 to 60°C), tetramethyleneglycol with the molecular weight not less than 0.6 kDa ($T_m$ is ranged from 17 to 60°C), high molecular weight isotactic polypropylene glycol ($T_m$ is up to 75°C) and poly-e-caprolactone with the molecular weight of at least 0.55 kDa ($T_m$ is ranged from 18 to 60°C) meet this condition. It should be appreciated that crystalline phases, formed by chains of the same polymers while they are segments of block-copolymers, have lower melting temperatures, than corresponding free (non-bonded) products with the same molecular weight.

Within the important temperature range the phase transition of melting of above block-copolymers is not accompanied by transformation of this material into a liquid, because at such moderate temperatures the melting can affect only those crystals that are formed by blocks of poly(co)alkyleneoxides or PCL with lower melting points while crystalline or glassy phase of 'hard' blocks is kept unchanged.

The FHCP during blending of with the polymers and LMWs, having at least one end group OH, NHR (wherein R - hydrocarbonic radical) or $NH_2$, can form grafted or partly cross-linked structures, which can provide for their enhanced compatibility with each other and with HCP.

All suitable components of adhesive layer can be found among commercially available and relatively low-cost products.

Maleic anhydride grafted (maleated) linear copolymers of ethylene with with $\alpha$-olefins and copolymers of ethylene with vinylacetate are commercially produced by a number of companies, for instance, DuPont de Nemours as Bynel® and Fusabond® (a concentrate with high grafting level), Arkema Inc. as Orevac® trademark, Dow Chemical Co. as Amplify® (a concentrate) trademark, etc.

Maleated styrene-ethylene-butadien-styrene thermoplastic elastomers are commercially produced, e.g., by Kraton Polymers U.S. LLC (US) as Kraton® FG trademark.

Copolymers of ethylene and (meth)acrylic acid are commercially produced, for example, by DuPont de Nemours as Nucrel®, copolymers (terpolymers) of ethylene, vinylacetate and maleic anhydride are supplied by Arkema Inc. as Orevac ®. Copolymer (terpolymer) of ethylene, methacrylate and glycidic ester of acrylic acid (glycidyl arylate), also having proper adhesive capacity to polyamides, is produced, for example, by Arkema Inc. as Lotader® AX8900, AX8920 and AX8940 and terpolymer of ethylene, ethylacrylate and maleic anhydride as Lotader® 7500, 5500, 4700 and 4720.

For example, adhesive layer can be completely made of adhesive thermoplastic material that preferably meets requirement concerning the important melting range, such, for instance, as Amplify® TY1052H ($T_m$ is about 63°C), Orevac® 18211 ($T_m$ is about 75°C), Bynel® E418 ($T_m$ is about 74°C) or Fusabond® C190 ($T_m$ is about 71°C).

One can easily find among commercial thermoplastic HCP those able to melt lower than 80°C preferably in a range from 40 to 75°C. They can be selected from, but are not limited to, copolymers of ethylene and vinylacetate, such as products of Arkema e.g. Evatane® 28-05 ($T_m$ is about 72°C) or DuPont e.g. Elvax® 3182 ($T_m$ is about 73°C) and Elvax® CM 3326 ($T_m$ is about 60°C), copolymers of ethylene and $\alpha$-olefins (plastomers) e.g. Affinity® EG 8150G ($T_m$ is about 55°C) etc. from Dow Elastomers or Exact® Plastomer 5062 ($T_m$ is about 43°C) from Exxon Mobile.

Trans-1.4-polyisoprene (synthetic gutta percha) is commercially available, for instance, from Kuraray Co, as TP-301 trademark ($T_m$ is about 67°C).

Unmodified, for the most part amorphous, partly olefinic or non-olefinic hydrocarbonic (co)polymers such as SBS, SIS, SEBS and some synthetic rubbers are available, for instance, under Kraton® family of trademarks from Kraton Polymers US LLC.

Water-soluble polyethylene glycols with the molecular weight about 0.2-35 kDa, having end hydroxyl groups, are produced, for instance, by Clariant AG (Switzerland) under PEG® family of trademarks. Dow Chemical Co. also manufactures polyethylene glycols as Carbowax® family of trademarks and polyethylene oxides the polymers of the same structure, but with molecular weight of 100 kDa and higher, as Polyox® family of trademarks. (Co)polymers of alkyleneoxides (mainly of ethylene oxide and propylene oxide) with one or two end amino groups are produced by Huntsman Corporation under Jeffamine® family of trademarks. Polytetramethyleneglycols (denoted also as polytetrahydrofurans) with the molecular weight up to 2 kDa are produced, for instance by BASF SE (Germany) as PolyTHF®. Perstorp Group (Sweden) manufactures poly-$\varepsilon$-caprolactone in form of olygomeric product with molecular weight 0.4 to 80 kDa, as well as thermoplastic material with the molecular weight 10 to 80 kDa, both as Capa® trademark. Block-copolymers e.g. PTHF-PCL are also available therein as Capa® 7201A trademark. Lubrizol Corp. commercially manufactures TPU with blocks of poly-$\varepsilon$-caprolactone as Pearlthane® trademark.

Hydrophobic LMW such as paraffins waxes and lipids are produced by numerous companies.

Apart from the above-listed obligatory layers the invented casing can comprise at least one additional polymeric layer (hereinafter also abbreviated as AP-L), comprising neither FHCP nor (co)polyamide, unless said layer is applied as a coating from solvent-based system. If any, it can comprise not more than 50% of soluble copolyamide, usually unsuitable for thermoplastic processing, among its solids.

The components for said additional polymeric layer or layers are preferably selected so that either the layer(s) has high moisture permeability, growing with temperature rise over the entire the important range 6° to 80°C according to Arrhenius Law, or, in the preferable variant, it undergoes a moisture permeability jump taking place in the same range due to melting of crystalline phases present therein. In the latter case, such layer can enhance or even predominantly provide the desirable effect of moisture permeability growth, caused, in addition, by phase transitions of melting in the adhesive layer. In this context, all preferable variants, mentioned in the description of the adhesive layer, and concerning to content of crystalline phase at 6 and 80 °C, also relate to this AP-L.

In concordance with the present invention the additional layer can be made in two different options.

Additional layer of the first type (hereinafter AP-L$_1$) is coextruded from one or more above non-functionalized HCP and preferably has a mutual interface with at least one adhesive layer. Such layer also can comprise above hydrophobic LMW (such as, for example, paraffins, waxes, etc), used in adhesive layer.

HCPs are also preferably selected, provided they have the phase transitions in the important temperature range, in order that the additional layers made thereof undergo the desirable jump of moisture permeability. It is preferable that thickness of this layer (or layers) is not more than 10 % of total thickness of the invented casings.

The additional layer of the second type (hereinafter AP-L$_2$) preferably is made of at least one of such components, as cellulose esters, thermoplastic poly-e-caprolactone, water-soluble (co)polymers, including polyvinyl alcohol, polyvinylpyrrolidone, polyethylene oxide, cellulose ethers, as well as block-copolymers, having hard blocks of polyamides, polyesters or polyurethanes, and soft blocks of aliphatic (co)polyether (without limitation, of polyethylene oxide with the molecular weight more than 10 kDa), poly-e-caprolactone-diol or polysiloxanes, or any blend of the listed components. It is preferable that thickness of this layer (or layers) is not more than 40% of total thickness of the invented casings, because its components have not enough high strength properties. As the listed components usually exhibit acceptable immanent adhesiveness to polyamides, such additional layer or layers can be located in any position of the casing layer sequence. Besides, the additional layer can be made of non-reinforced or fiber-reinforced viscose. In this case, because the use of melt-coextrusion technique is impossible, such additional layer is always located in periphery of the casing layered structure.

Permanently high moisture permeability with relatively weak temperature dependence of Arrhenius type is typical for cellulose, cellulose esters, PVA, as well as for above listed block-copolymers, if soft blocks composing thereof are not crystallizable in principle, as, for example, chains of atactic polypropylene glycol or polysiloxane, or, at least, they do not form crystals in important temperature range, as too short chains of PEO, PTHF or PCL.

The permeability jump in the important range caused by the melting of crystalline phase formed by the soft blocks, is typical for block-copolymers of the same type, if the same PEO, PTHF or PCL blocks are enough long.

The above listed water-soluble polymers, as well as homopolymeric PCL are preferably used in blend with mentioned highly permeable to water vapor polymers, if a mass fraction of the latter is predominant. The former are usually added to increase the moisture permeability of the layer.

Temperature behavior of PEO, PTHF and PCL and their crystallizable blocks has been already discussed.

It should be noted, that considerations concerning moisture permeability of the additional layer(s) also can relate to polyamide-containing layer. Although usually such layer (or layers) is characterized by permanently high moisture permeability, there are variants of embodiment, when moisture permeability of the layer undergoes the jump in the important temperature range due to melting of a material (or materials) present therein. This can take place, for example, when this layer comprises the great fraction of above block-copolymers with meltable PEO, PCL or PTHF blocks, such as, for example, (co)polyether esters (such as Arnitel® or Hytrel®, etc.). Similar block-copolymer also can be found among PEBAs, provided at least one of above listed non-polyamide components of the melt-(co)extruded PA-L is present therein. Consequently, polyamide-containing layer also can contribute to the desirable moisture permeability jump effect, caused by phase transition of melting in the adhesive layer and/or in the additional layer.

Besides, any layer of invented casing can comprise total percentage of such additives as cross-linking agents, antioxidants, plasticizers, pigments, colorants, reinforcing agents, matting agents, slipping agents, fine and coarse fillers, antiblocking agents etc., which is not more than 15%.

As to actual structure of the invented casing, i.e. a sequence of its layers and preferable compositions of these layers, the structure can be selected depending on its intended application.

A layer of any described type can be peripheral, i.e. exposed to the casing content or to environment, as well as it can be of a core type, i.e. being surrounded by other layers.

For instance, if encased food needs reliable protection from oxidative damage, the casing apart from above set of properties should have proper oxygen barrier characteristics at least at the storage environment. In this case it is preferable that the PA-L comprising PVA or PVP is used as the outer (exposed to the atmosphere) layer.

In those circumstances it is preferable that this PA-L has maximum thickness. Mentioned water-soluble polymers as well as their blends with polyamides are characterized by outstanding gas barriers properties but only being enough dry. Because the layer comprising thereof and exposed to relatively dry air is isolated from humid casing content by the layer(s) of A-L or AP-L$_1$ type that can be the moisture barrier(s) at least in above storage environment, gas barriers properties of the whole casing also can be outstanding to the full extent if the packed food is stored in proper conditions (i.e. at low RH). Thus in this respect the abovementioned embodiment of the invented casing excels single layer smokable casings of comparable thickness disclosed in Russian Patent No2182107, as well as multilayer casings with a nylon layer as oxygen barrier disclosed, for instance, in German Patent No4017046, Publ. Date 28.11.91.

If the oxygen barrier is not so important, for instance, because either the secondary packing of a food product is intended, or the product is free of easy-rancidifying fats, or it comprises enough amount of antioxidant, layer(s) of A-L or AP-L$_1$ type can be used as the outer layer.

The material of food-contact layer (inner layer of tubular casing) is selected, chiefly, with account of desirable food adhesion properties of casing. For instance, if the weak adhesion of casings to sausage meat or to cheese matter is desirable, a PA-L of PA/PVA blend or layer of AP-L$_1$ type can be selected as the food-contact layer.

If the moderate adhesion of casings to its content is desirable, A-L can be used as the inner layer.

If the strong adhesion of casings to its content is desirable, the food-contact layer can be a polyamide-comprising layer of PA/PVP blend or of a polyamide blend with any above highly moisture permeable block-copolymer, or with thermoplastic cellulose ester, or any layer of AP-L$_2$ type, comprising no PVA, as well as a viscose-based layer.

In the event that casing has three or more layers, one of core layers can be an adhesive layer. Against this background both PA-Ls and AP-Ls can be used as peripheral layers: both peripheral layers can be of PA-L type, one peripheral layer can be of PA-L type, while another one is AP-L and if the number of layers is more than three both layers can be of AP-L type (at the same time PA-L can be a core layer). Besides, at least one of peripheral layers can be of A-L type.

The invented casing can be entirely made by melt-coextrusion method using commercial pelletized products as raw materials. Nevertheless some of components such as polymer/LMW blends can be premade by blending in a suitable apparatus for polymer kneading, for instance, in a twin-screw extruder, with further granulation. Casing can be shaped as tubular or flat film, it can be non-oriented, monoaxially oriented or biaxially oriented, and optionally, heat set. Preferably, this casing is produced as a tubular film by either continual blown film extrusion technique, or by the process of 'triple bubble', comprising the following basic stages: melt coextrusion of primary tube (the first bubble), following orientation stretch by compressed air inflation thereof (the second bubble) and heat set of resulted tube filled with air (the third bubble) with simultaneous partial one- or two-dimensional relaxation of the film.

Besides, the invented film can be made by a method, comprising preparation of casing having one or more coextruded layers by any above methods followed by application of layer(s) of A-L, PA-L or AP-L type as a coating. In this case a formulation of A-L can comprise high (or even predominant) content of LMW, with melting temperature that is a little higher than room temperature (35-50°C), and relatively low melt viscosity. The material of A-L can have melting temperature even lower than room temperature (but higher than 6°C), if straight after the application the layer is subjected to cross-linking under the action of ultraviolet (provided UV-initiators were added in the formulation) or X-rays or γ-irradiation or e-beams. Besides, this formulation can comprise heat-activated cross-linking agents, to cure its polymeric components during a heat treatment directly after the application. Such agents can be found among sulfur, vulcanizing rubbers and gutta percha under action of heat, epoxides, such as epoxidized plant oils or Bisphenol A epoxy resin that can react at elevated temperature with maleinized polymers, to produce cross-linked structures.

The layer of A-L type with higher melting temperature can be applied onto both sides of collapsed tubular casings, for example, by extrusion coating technique. If the melting temperature is low (lower than room temperature) the layer can be applied, for instance, by one of rotogravure methods. In the latter case the layer formulation can be composed so, that it can be cured under application of heat or UV radiation. Besides, cured or uncured A-L can be overlaid by a layer of a mechanically stronger but highly moisture permeable material, applied from a solution in a suitable solvent also by rotogravure technique or by any other suitable method.

A-L layer, applied as a coating on (co)extruded casing, can become the inner (food contact) layer of a tubular casing, if the casing with the coating is subjected to shirring and then the resulted shirred stick is turned inside out.

Further, the layer of A-L type being uncured, wherever it is located, it can bond the casing with one more highly moisture permeable layer. The latter can be associated with the casing by non-extrusion method of two different tubular films coupling disclosed in U.S. Patent No8226457, Publ. Date 24.07.2012. For this purpose, two premade tubular casings are used; one of them is flat-collapsed and reeled into a roll (an inner casing), and other is shirred into a stick (outer casing). They are combined into a composite casing by passing of unreeled inner casing through the internal space of shirred stick and inflation of the inner casing arranged inside of deshirred outer casing by air. Then the composite tubular casing is shirred again. This patented technique as such is not intended to use any adhesive between the casings.

The additional highly moisture permeable layer of the composite casings according to present invention is made preferably of non-reinforced or cellulose-fiber-reinforced viscose. If it is desirable to put the viscose layer on outer surface of the tubular synthetic casing, a commercial viscose casing can be used as the outer (shirred) layer and the invented casing with outer coating can be used as inner (reeled into a roll) layer, otherwise, a roll of viscose casing is used inner layer formation, and shirred invented casing with inner coating is intended for the outer layer. In the both cases the A-L can provide glue junction between the contacting casings. Viscose can effectively absorb and desorb food aromas and colorants therefore it is very useful as a matter of outer or inner layer if the smoke treatment of packed food is accomplished using liquid smoke at early stage. In particular, casing based on viscose can be extruded directly of a viscose/ liquid smoke blend, as it is disclosed in patent US No6299917, Publ. Date 09.10.2001, and preferably be used as the inner layer of the composite casings according to present invention.

If melt-(co)extruded casing is shaped as a long length sheet, the layer of viscose can be coupled to this film by conventional lamination methods, and for bonding of the films an adhesive layer according to present invention, which has been melt-coextruded or applied as a coating, is preferably used.

In the preferable embodiments the invented casing is a tubular film; however it also can be shaped in a long length sheets wound into a roll for using as packaging material in packaging machines of vertical or horizontal type. In this case it is preferable that peripheral layers casings are made of chiefly heat-sealable materials such as, for instance, PEBA or (co)polyether polyester block-copolymers (AP-Ls). Preparation of such sheets can be performed, for instance, by ripping of remade tubular casing in its machine direction or by means of flat-slot die extrusion, optionally, followed by mono- or biaxial stretching.

The following Examples, provided exclusively for illustration of the present invention and without limitation of the scope of claims, disclose the most preferred embodiments of the present invention.

## Examples

**Materials, used in the Examples, and their designations**

### Polyamides

PA - Semicrystalline polyamide 6 with the melting temperature 220°C and density of about 1.14 g/cm$^3$ - Ultramid® B3 (available from BASF SE).

coPA1 - Semicrystalline copolyamide 6/66 (content of PA monomer 66 is about 15%) with the melting temperature 195°C and density of about 1.13 g/cm$^3$ - Ultramid® C33 (available from BASF SE).

coPA2 - Semicrystalline alcohol soluble copolyamide 6/66 according to industry standard No6-05-438-93 (content of PA monomer 66 is about 40%) with the melting temperature 160°C and density of about 1.12 g/cm$^3$, - PA 6/66-3 (available from ANID LLC, Yekaterinburg, Russia).

### Hydrophilic polymers

PVA - Polyvinyl alcohol with hydrolysis degree of about 74% and viscosity of 2% aqueous solution about 5 sP - BC-05 (available from ChangChun Group).

PEBA1 and PEBA2 - Block-copolymer of polyamide and polyglycol - Pebax® MV3000 and Pebax® MH1657 grades correspondingly (available from Arkema).

### Polymeric adhesives

Ma-EVA - Modified by maleic anhydride copolymer of ethylene and vinylacetate with the melting temperature about 75°C - Orevac® 18211 (available from Arkema).

Ma-LLDPE1 - Maleinized linear polyethylene of low density, concentrated polymeric adhesive with the melting temperature about 62°C - Amplify® TY 1052 H (available from Dow Chemicals).

Ma-LLDPE2 - Maleinized linear polyethylene of low density with the melting temperature 119°C - Modic® M603E (available from Mitsubishi Chemical Europe GmbH).

Ma-SEBS - Maleinized amorphous triblock-copolymer of SEBS type (polystyrene-random copolymer of ethylene and buten-polystyrene) - Kraton® FG1924X (available from Kraton Polymers US LLC).

### Non-functionalized hydrocarbonic (co)polymers

POP - Polyolefin Plastomer (copolymer of ethylene and α-olefin) with the melting temperature of about 55°C - Affinity® EG 8100G (available from Dow Chemicals).

LDPE - Polyethylene of low density made by high pressure polymerization with density of 0.921 and with melting temperature 107°C - PVD 10803-020 grade in accordance to GOST 16337-77 (available from Tomskneftekhim LLC, Russia).

EVA - Copolymer of ethylene and vinylacetate (about 28% VA) with the melting temperature about 72°C - Evatane® 28-05 (available from Arkema).

TPI - trans-1.4-polyisoprene (synthetic gutta percha) with the melting temperature about 67°C - TP®-301 (available from Kuraray Co.).

**Low molecular weight hydrophobic substances**

PW60 - Paraffin wax with the melting temperature about 60°C (sold by Merck KGaA).
LA - Lauric acid with the melting temperature about 44°C (sold by Merck KGaA).

**Additives and adjuvants.**

ESBO - Epoxidized soybean oil of ST trademark with epoxide equivalent (weight percentage of oxirane oxygen) of 7.5 (available from 'Himalyans', Russia), cross-linking agent for maleinized products.

**A method for making of pelletized polymeric blend hereinafter referred to as PPB.**

PVA1 powder and PEBA2 pellets are fed into of twin-screw extruder hoppers for powdered and pelletized materials respectively. The ratio of weight feeding rates PVA1: PEBA2 is 3:1. Polymeric raw materials are melted, mixed and kneaded in the extruder, and then resulted melt is extruded as thin rod that is cooled by air current and cut into standard pellets. The resulted pelletized polymer blend hereinafter is referred to as PPB.

**Example 1.**

Three formulations, shown in Table 1, are fed into hoppers of three operating with different productive capacities extrudes of three-layer coextrusion machine, where they are melted, mixed and homogenized. After that the resulted melts are supplied into three-layer head, where melted three-layer structure is formed, wherein the inner layer is layer A, and outer one is layer C. Then the layered melt is extruded through annular die as a primary tube that is quenched by cold water up to temperature 13-15°C. The solidified primary tube has mean diameter of 25 mm and mean thickness of 192 $\mu$m. Then by means of set of active pairs of nip rollers the primary tube is supplied into tubular infrared oven, where it is heated up to 80°C, and then it is subjected to orientation stretch with stretch ratio of 2.5 and 3.7 in machine and transversal direction correspondingly. Following heat set (annealing) of the resulted oriented tubular film is accomplished in tubular IR-oven at temperature 135-140°C for 3-5 seconds, while the tubular film is filled with air. The heat set is accompanied by controlled dimensional relaxation with a ratio of longitudinal shrink of 1.10, and by maintaining of the bubble caliber in the level of 82-84 mm, performed by corresponding adjustment of rotation speeds of "entrance" and "exit" active pairs restricting the tertiary bubble. After the annealing the flat-collapsed casing is allowed to move over cooling roller and is cooled up to 25°C and is wound into a roll. The resulted casing has mean diameter of about 80 mm and thickness of about 25-27 $\mu$m.
Then after sampling of the casing, it was shirred into sticks that were delivered to meat processing factory for stuffing with sausage meat by means of staffing and clipping industrial apparatus and for actual testing during the sausages cooking and storing. The heat treatment of the sausages in this casing comprised scalding (steam cooking) for 60 minutes at 78°C, drying for 40 minutes at 80°C and RH 20% and smoking for 40 minutes at 80°C and RH 90-95%. After shower cooling, the sausages are placed for storage into cooling chamber of industrial refrigerator with the temperature of 6°C.
Sausages are weighed directly after stuffing, after cooling, and after 10 days of storage in the refrigerator.
Characteristics of the casings are shown in the Table 3.

**Table 1**

| Extruder | Share of the extruder in the total productivity of the machine, % | Formulation |
|---|---|---|
| A | 30 | PA (60%) + PPB (40%), i. e. PA (60%) + PVA1 (30%) + PEBA2 (10%) |
| B | 20 | POP (80%) + Ma-LLDPE1 (20%) |
| C | 50 | coPA1 (56%) + PPB (44%), i. e. coPA1 (56%) + PVA1 (33%) + PEBA2 (11%) |

**Comparative Example 1a.**

This tubular casing is made by means of a single-layer extrusion machine, which is fed through its hopper by pellets of coPA1. Following operations are performed in accordance with the Example 1 with resulting in single-layer casings of coPA1 that is the most permeable among commercial nylons.

**Comparative Example lb.**

Three-layer tubular casing is made by the process described in the Example 1, but formulations of layers were the following:

formulation of layer B: anhydride-grafted LLDPE of Admer® 518 available from Mitsui Chemicals Europe GmbH with the melting temperature about 125°C,
formulation of layer A and C: coPA1.

**Comparative Example 1c.**

Tubular casing is made by the process of the Example 1, but by means of two-layer extrusion machine. Resulted film comprises two layers, identical by its formulation to the layers A and C of the film according to the Example 1. Thickness of the film is 95% of the casing thickness in the Example 1.

**Comparative Example 1d.**

Tubular casing is made in accordance with the Example 1, except that:

layer (A) is extruded from a blend PA and LDPE (weight ratio is 60:40) and its thickness is 50% of total thickness casings,
the formulation of layer (B) is identical to that of layer (A) of the Example 1 and its thickness is 19 % of total thickness,
the formulation of layer (C) is identical to that of layer (C) of the Example 1 and its thickness is 31 % of total thickness, and total thickness of the casing is equal to that of the Example 1.*
*An attempt to increase LDPE percentage in the layer (A) of this casing up to 45% or more, led to delamination thereof during the heat set stage due to weak interlayer adhesion.

**Example 2.**

Three-layer tubular casing is made by the process of the Example 1, using layer formulations and relative productive capacities of extrudes, shown in the Table 2. The layer B blended composition is premade by mixing of its components and melt-kneading of the blend in the twin-screw extruder followed with pelletizing thereof.

**Table 2**

| Extruder | Share of the extruder in the total productivity of the machine, % | Formulation |
|---|---|---|
| A | 20 | PEBA1 |
| B | 20 | EVA (45%) + Ma-EVA (40%) + PW (15%) |
| C | 60 | coPA1 (56%) + PPB (44%) |

**Example 3.**

Three-layer tubular casing is made in accordance with the Example 1, except that the layer B formulation is TPI (60%) + Ma-SEBS (20%) + PW60 (20%). The layer B blended composition is premade by mixing of its components and melt-kneading of the blend in the twin-screw extruder followed with pelletizing thereof.

**Example 4.**

Three-layer tubular casing is made in accordance with the Example 2, except that the extruder (B) is fed by pure Ma-LLDPE2 and its productive capacity is of 4% of total coextrusion machine productive capacity and productive capacity of extruder (C) is of 76% of total coextrusion machine productive capacity, and the total coextrusion machine productive capacity is by 27% lower, than that of the Example 2. The thickness of resulted film is of 18-19 $\mu$m, thickness of adhesive layer is of 0.7-0.8 $\mu$m. Following operations differ only in the fact that the casing to be stuffed by sausage meat is incased into a tubular net, which imparts sufficient mechanical strength and toughness to the film package having too low thickness.

### Example 5.

Commercial melt-extruded and biaxially stretched single-layer tubular casings based on PA 6/66 and comprising 25% PVA with diameter of 21 mm and thickness of about 20 $\mu$m was used as a substrate for preparing of invented casing comprising layers of coating. By means of flexographic machine of DR6 trademark (available from KUKO GmbH, Germany) the 7 layers of the coating are applied, with intermediate drying at 60°C on both sides of this flat-collapsed casing. The layers are applied in following sequence:

- three layers of coating forming regulating group of layers, wherein first and third ones are derived from a solution, comprising 2.5% Ma-SEBS, 2% TPI and 0.5% PW60 in toluene, and second one is derived from the solution, comprising 3% Ma-SEBS, 3% TPI, 4% PW60 and 0.04 % ESBO in toluene; and then
- four layers of coating forming group of additional polymeric layers, every of which is derived from a solution, comprising 2.5% PEBA2 and 2.5% coPA2 (non-thermoplastic polyamide) in water-alcohol solution (the weight ration ethanol : water is 7:3). After the final drying the coated casing is reeled into a roll. The mean total thickness of the coating is about 2 $\mu$m, i.e. in consideration of almost equal viscosities and percentage of solids in both solutions, the thickness of every group of layers can be estimated as about 1.0 $\mu$m.

The subsequent operations are the same as those of the Example 1, except that the casing is stuffed by meat emulsion for frankfurters, smoke treatment time is 20 minutes, and resulted frankfurters are stored being in links.

### Comparative Example 5a.

The commercial casing of the Example 5, but without coating, is used as a comparative sample. The sequence of test operations is the same as that of the Example 5.
Characteristics of invented casings as well as of comparative samples are shown in the Table 3.

**Table 3**

| Characteristics | | Examples | | | | | | | | | |
|---|---|---|---|---|---|---|---|---|---|---|---|
| | | 1 | comp. 1a | comp. 1b | comp. 1c | comp. 1d | 2 | 3 | 4 | 5 | comp. 5a |
| WVRT, $g/(m^2\ day)$ | According to ASTM E96 'desiccant method', but at 80°C and RH 100/0 % | 5800 | 3850 | 880 | 6800 | 3520 | 6350 | 6500 | 4850 | 5300 | 5800 |
| | According to DIN 53122 at 23°C and RH 85/0 % | 58 | 77 | 11 | 225 | 69 | 48 | 20 | 52 | 55 | 180 |
| Loss in weight | During heat treatment, $W_{80}$, %* | 1.1 | 0.8 | 0.2 | 1.3 | 0.7 | 1.2 | 1.3 | 1 | 4.8 | 4.94 |
| | During storage for 10 days, $W_6$, %** | 1.3 | 2.5 | 0.4 | 8.8 | 2.9 | 1.4 | 1.4 | 1.6 | 6.0 | 29.9 |
| | Weight loss ratio $W_{80}/W_6$ | 0.85 | 0.32 | 0.50 | 0.15 | 0.24 | 0.86 | 0.93 | 0.63 | 0.80 | 0.17 |
| Smoking effects, rating | Flavor, af. c. *** | 4.9 | 2 | 1.1 | 5 | 2.2 | 4.9 | 5 | 4.4 | 4.5 | 4.9 |
| | Flavor, af. 10 ds. *** | 4.5 | 1.7 | 1 | 3.3 | 1.9 | 4.7 | 4.8 | 4.3 | 4.2 | 3.2 |
| | Color, af. c. *** | 4 | 2 | 1 | 5 | 2 | 4.5 | 5 | 3.5 | 4.5 | 4.8 |
| | Compactness of the skin, af. c. *** | 4 | 2 | 1 | 5 | 2 | 4.5 | 5 | 3.5 | 4 | 4.9 |

* Percentage of loss in weight during heat treatment ($W_{80}$) is calculated as percentage of loss in a sausage (frankfurters) weight measured directly after its (their) heat treatment,

shower cooling and removing of water out of its surface, based on the initial weight of the sausage (frankfurters) measured directly after its (their) stuffing.

** Percentage of loss in weight during storage ($W_6$) is calculated as percentage of loss in a sausage (frankfurters) weight measured after its storage for 10 days in a refrigerating chamber at 6°C and RH about 50%, based on the weight of the cooked sausage (frankfurters) measured directly after its (their) heat treatment, shower cooling and removing of water out of its surface.

*** The characteristics were evaluated by a panel of 10 experts using a rating scale, taking '2' as a rating of characteristics of a product right after its cooking (af. c.) after 10 days of its storage (af. 10 ds.) or in the casing of comparative Example 1a and '5' as a rating of those in the casing of the Example 1c.

Data shown in the table convincingly confirm that invented casing has high moisture permeability at smoke treatment environment, which allows effective smocking of food, enclosed therein, and development of typical features of smocked foods including specific surface skin.

Comparison of expert rating concerning color of smoked food and compactness of its surface skin, as well as the product flavor, estimated after its cooking and storage (including shipping and distribution) in the invented casing, on the one hand, and the those of food products, cooked and kept in alternative casings, confirms higher effectiveness of invented casing and its excellent ability to preserve qualities of packed products.

Thus, the invented casing excels casings before known from the prior art according to totality of demonstrated characteristics.

## Claims

1. A casing for smoking and storing of food products, a casing being a multilayer film having at least one thermoplastic polyamide-containing layer and at least one adhesive layer, comprising functionalized predominantly hydrocarbonic (co)polymer, said functionalized predominantly hydrocarbonic (co)polymer comprising predominant total molar percentage of unsaturated hydrocarbon monomer units and having functional groups, able to react with at least one of groups, selected from primary amino group, carboxyl group and hydroxyl group, wherein every polyamide-containing layer is made of a composition comprising :

   a) 5 to 95% of at least one (co)polyamide and
   b) 95 to 5% of at least one polymer, selected from the list, consisting of water-insoluble at 20 °C but highly permeable to water vapor thermoplastic (co)polymers selected from thermoplastic cellulose esters, block-copolymers of aliphatic (co)polyester and aliphatic (co)polyether, block-copolymers of polyurethane and aliphatic (co)polyether, wherein repeating units of aliphatic (co)ether block comprise 2 to 4 carbon atoms, and also blends thereof; and water-soluble at 20 °C (co)polymers selected from polyvinyl alcohol, polyvinylpyrrolidone, polyoxazoline, cellulose ethers, water-soluble starch, modified starch, dextrin, and also blends thereof, wherein said casing is **characterized by** the water vapor transmission rate, measured according to DIN 53122 at 23°C and RH 85%, which is not more than 100 g /(m$^2$ day) and water vapor transmission rate, measured by a method that is analogous to the 'Desiccant Method' according to ASTM E96, but accomplished at ambient RH 100% and at the temperature 80°C, which is not less than 4000 g /(m$^2$ day).

2. The casing according to the claim 1, wherein said casing is **characterized by** the $W_{80}/W_6$ ratio, wherein $W_{80}$ is weight loss of sausage in this casing during a heat treatment, comprising drying at 80°C and RH 20% for 40 minutes, and $W_6$ is weight loss of sausage in the same casing during the sausage storage at 6°C for 10 days, said ratio being not less than 0.6, preferably not less 0.7 and most preferably not less than 0.8.

3. The casing according to the claim 1, wherein (co)polyamide is selected from PA 46, PA 6, PA 66, PA 9, PA 12, PA 4/6, PA 46/6, PA 6/66, PA 6/66/12 and blends thereof.

4. The casing according to the claims 1-3, wherein said polyamide-containing layer additionally comprises block-copolymers of polyamide and aliphatic (co)polyether.

5. The casing according to the claim 1, wherein at least one adhesive layer comprises not less than 15% of at least one functionalized predominantly hydrocarbonic (co)polymer, said functionalized predominantly hydrocarbonic (co)polymer is selected from products of unsaturated hydrocarbons copolymerization with at least one unsaturated functional monomer, selected from unsaturated carbonyl acids, glycidyl esters of unsaturated carbonyl acids, anhydrides of unsaturated carbonyl acids, and optionally with at least one monomer, selected from vinyl esters, esters of unsaturated carbonyl acids, amides of unsaturated carbonyl acids, and also from blends thereof.

6. The casing according to the claim 1, wherein at least one adhesive layer comprises not less than 15% of at least one functionalized predominantly hydrocarbonic (co)polymer, said functionalized predominantly hydrocarbonic (co)polymer is selected from graft products of predominantly hydrocarbonic (co)polymers of at least one unsaturated functional monomer, selected from unsaturated carbonyl acids, amides of unsaturated carbonyl acids, glycidyl esters of unsaturated carbonyl acids, anhydrides of unsaturated carbonyl acids, and also from blends thereof.

7. The casing according to the claim 6, wherein predominantly hydrocarbonic (co)polymers are selected from polyethylene of low density made by high pressure polymerization, polyethylene of high density made by low pressure polymerization, linear copolymers of ethylene with $\alpha$-olefins comprising 3 to 12 carbon atoms with predominant content of ethylene, copolymers of ethylene with predominant content of ethylene with at least one unsaturated monomer, selected from vinylacetate, (meth)acrylic acid, esters of (meth)acrylic acid; stereoregular polypropylene, propylene copolymers with at least one olefin; natural or synthetic cis-polyisoprenes, natural or synthetic trans-polyisoprenes, polybutadienes with various fraction of trans- and cis-units, amorphous ethylene/propylene random copolymers, amorphous ethylene/propylene/diene random copolymers, butadiene/styrene random copolymers, styrene-butadiene-styrene block-copolymers, styrene-isoprene-styrene block-copolymers, styrene-ethylene/butene-styrene block-copolymers, and also blends thereof.

8. The casing according to the claim 1, wherein at least one adhesive layer comprises not less than 15% of at least one functionalized predominantly hydrocarbonic (co)polymer and not more than 85% of at least one of components, selected from non-functionalized thermoplastic (co)polymers and low molecular weight organic substances or blends thereof.

9. The casing according to the claim 8, wherein at least one non-functionalized thermoplastic (co)polymer is selected from predominantly hydrocarbonic (co)polymers, selected from polyethylene of low density made by high pressure polymerization, polyethylene of high density made by low pressure polymerization, linear copolymers of ethylene with $\alpha$-olefins comprising 3 to 12 carbon atoms, with predominant content of ethylene, copolymers of ethylene with predominant content of ethylene with at least one unsaturated monomer, selected from vinylacetate, esters of (meth)acrylic acid and aliphatic alcohols, stereoregular polypropylene, propylene copolymers with at least one olefin, natural rubber, synthetic isoprene rubber, synthetic butadiene rubber, butadiene-styrene rubber, ethylene/propylene/diene rubber, natural gutta percha, synthetic gutta percha, styrene-butadiene-styrene thermoplastic elastomer, styrene-isoprene-styrene thermoplastic elastomer, styrene-ethylene/butene-styrene thermoplastic elastomer; as well as heterochain (co)polymers with total molecular weight more than 10 kDa, comprising homopolymer chains with the molecular weight, preferably, not less than 0.6 kDa of at least one polymer, selected from polyethylene oxide, polytetrahydrofuran, poly/oligo-$\varepsilon$-caprolactone.

10. The casing according to the claim 9, wherein heterochain (co)polymers are selected from at least one of polymer types, including homopolymers and block-copolymers, additionally comprising blocks of at least one of polymer classes, selected from polyamides, polyesters and polyurethanes.

11. The casing according to the claim 8, wherein at least one low molecular weight organic substance are selected from alkanes with number of carbon atoms not less than 15, petroleum or mineral waxes, natural waxes, synthetic waxes, aliphatic alcohols with number of carbon atoms not less than 11, linear fatty acids with number of carbon atoms not less than 8, synthetic ester of fatty acids, synthetic amides of fatty acids, monoglycerides of fatty acids, diglycerides of fatty acids, triglycerides of fatty acids, (co)oligomers with total molecular weight of less than 10 kDa, comprising homooligomeric chains of at least one oligomer with the molecular weight, preferably, not less than 0.6 kDa, selected from polyethylene oxide, polytetrahydrofuran, poly-ε-caprolactone or any mixture of above components.

12. The casing according to the claim 1, wherein it has at least one additional polymeric layer, comprising no functionalized predominantly hydrocarbonic (co)polymer.

13. The casing according to the claim 12, wherein at least one additional layer is predominately composed of at least one non-functionalized predominantly hydrocarbonic (co)polymer and has an interface with at least one adhesive layer.

14. The casing according to the claim 12, wherein at least one additional layer furthermore comprises at least one low molecular weight organic substance, selected from alkanes with number of carbon atoms 15-40, petroleum or mineral waxes, natural waxes, aliphatic alcohols with number of carbon atoms not less than 11, linear saturated fatty acids with number of carbon atoms 8-26, monounsaturated fatty acids with number of carbon atoms 19-22, synthetic ester of fatty acids, synthetic amides of fatty acids, monoglycerides of fatty acids, diglycerides of fatty acids, triglycerides of fatty acids or any mixture thereof.

15. The casing according to the claim 12, wherein at least one additional layer is predominately composed of at least one component, selected from alcohol-soluble non-thermoplastic copolyamides, cellulose esters, thermoplastic poly-s-caprolactone, block-copolymers, having hard blocks of at least one polymer, selected from polyamides, polyesters and polyurethanes, and soft blocks of at least one polymer, selected from aliphatic (co)polyethers, poly-s-caprolactone-diol and polysiloxanes, polyethylene oxide with the molecular weight of more than 10 kDa, as well as, water-soluble (co)polymers, including polyethylene oxide, polyvinyl alcohol, polyvinylpyrrolidone, cellulose ethers or of any bend of listed components.

16. The casing according to the claim 1 or 12, wherein any of its layers comprises not more than 15% of at least one additive, selected from cross-linking agents, antioxidants, plasticizers, pigments, colorants, reinforcing agents, matting agents, slipping agents, fine and coarse fillers, and antiblocking agents.

17. The casing according to the claim 1, wherein it has 2 to 7 layers, total thickness of 15 to 50 μm, and a thickness of the adhesive layer of 0.5 to 20 μm.

18. The casing according to the claim 1 or 12, wherein it has at least one melt-extruded layer and at least one layer being a coating.

19. A smoked food product, the food product being prepared and stored in the casing according to any of claims 1-18, wherein said smoked food product is a sausage, a frankfurter, a Vienna sausage, a ham or processed cheese.

**Patentansprüche**

1. Hülle zum räuchern und lagern von Lebensmitteln, wobei die Hülle eine mehrschichtige Folie mit mindestens einer thermoplastischen polyamidhaltigen Schicht und mindestens einer Adhäsionsschicht ist, die ein funktionalisiertes überwiegend Kohlenwasserstoff(co)polymer enthält, wobei das gesagte funktionalisierte überwiegend Kohlenwasserstoff(co)polymer einen überwiegenden Gesamtmolprozent an ungesättigten Kohlenwasserstoffmonomereinheiten umfasst und funktionelle Gruppen aufweist, die mit mindestens einer der Gruppen reagieren können ausgewählt aus primären Aminogruppen, Carboxylgruppen und Hydroxylgruppen, wobei jede polyamidenthaltende Schicht aus einer Zusammensetzung hergestellt ist welche

a) 5 bis 95 % mindestens eines (co)Polyamids und

b) 95 bis 5 % mindestens eines Polymers ausgewählt aus wasserunlöslichen bei 20°C aber hochwasserdampfdurchlässigen, thermoplastischen (co)Polymere ausgewählt aus thermoplastischen Celluloseester, Block-Copolymeren von aliphatischem (co)Polyester und aliphatischem (co)Polyether, Block-Copolymeren von Polyurethan und aliphatischem (co)Polyether, wobei die Polymereinheiten des aliphatischen (co)Etherblocks von 2 bis 4 Kohlenstoffatome aufweisen, sowie Mischungen davon, und aus wasserlösliche bei 20°C (co)Polymere ausgewählt aus Polyvinylalkohol, Polyvinylpyrrolidon, Polyoxazolin, Celluloseether, wasserunlöslicher Stärke, modifizierter Stärke, Dextrin sowie Mischungen davon, umfasst,
**gekennzeichnet durch** eine Wasserdampfdurchlässigkeit, die höchstens 100 g/(m2 Tag) beträgt, gemessen nach DIN 53122 bei 23°C und relative Feuchtigkeit 85%, und durch eine Wasserdampfdurchlässigkeit die mindestens 4000 g/(m2 Tag) beträgt, gemessen nach einer Methode, die analog zur "Desiccant Method" nach ASTM E96 ist, jedoch bei einer relativen Feuchtigkeit 100% und einer Temperatur von 80°C.

2. Hülle nach Anspruch 1, wobei die Hülle durch ein $W_{80}/W_6$-Verhältnis gekennzeichnet ist, wobei $W_{80}$ ein Gewichtsverlust der Wurst in dieser Hülle während einer Wärmebehandlung ist, die das Trocknen bei 80°C und einer relativen Feuchtigkeit von 20% für 40 Minuten umfasst, und $W_6$ ein Gewichtsverlust der Wurst in derselben Hülle während der Lagerung der Wurst bei 6°C für 10 Tage ist, wobei das Verhältnis mindestens 0,6, bevorzugt mindestens 0,7 und am meisten bevorzugt mindestens 0,8 beträgt.

3. Hülle nach Anspruch 1, wobei das (co)Polyamid vorzugsweise ausgewählt ist aus PA 46, PA 6, PA 66, PA 9, PA 12, PA 4/6, PA 46/6, PA 6/66, PA 6/66/12 und Mischungen davon.

4. Hülle nach einem der Ansprüche 1 bis 3, wobei die polyamidhaltige Schicht zusätzlich Blockcopolymere aus Polyamid und aliphatischem (co)Polyether umfasst.

5. Hülle nach Anspruch 1, wobei die mindestens eine Adhäsionsschicht mindestens 15% mindestens eines funktionalisierten, überwiegend Kohlenwasserstoff(co)polymers umfasst und wobei das gesagte funktionalisierte überwiegend Kohlenwasserstoff(co)polymer ein Produkt der Copolymerisation von ungesättigten Kohlenwasserstoffen mit mindestens einem ungesättigten funktionellen Monomer ist, ausgewählt aus ungesättigte Karbonsäuren, Glycidylester von ungesättigten Karbonsäuren, Anhydriden von ungesättigten Karbonsäuren, und gegebenenfalls mit mindestens einem Monomer ausgewählt aus Vinylester, Ester von ungesättigten Karbonsäuren, Amide von ungesättigten Karbonsäuren und Mischungen davon.

6. Hülle nach Anspruch 1, wobei die mindestens eine Adhäsionsschicht mindestens 15% mindestens eines funktionalisierten, überwiegend Kohlenwasserstoff(co)polymers umfasst und wobei das gesagte funktionalisierte überwiegend Kohlenwasserstoff(co)polymer ein Pfropfprodukt der überwiegend Kohlenwasserstoff(co)polymeren von mindestens einem ungesättigten funktionellen Monomer ist, ausgewählt aus ungesättigte Karbonsäuren, Amide von ungesättigten Karbonsäuren, Glycidylester von ungesättigter Karbonsäuren, Anhydride von ungesättigter Karbonsäuren und Mischungen davon.

7. Hülle nach Anspruch 6, wobei die überwiegend Kohlenwasserstoff(co)polymere aus der Gruppe ausgewählt sind umfassend LDPE, HDPE, überwiegenden Ethylenanteil aufweisende lineare Copolymere von Ethylen und $\alpha$-Olefine mit 3 bis 12 Kohlenstoffatomen, überwiegenden Ethylenanteil aufweisende Copolymere von Ethylen mit mindestens einem ungesättigten Monomer, ausgewählt aus Vinylacetat, (Meth)acrylsäure, (Meth)acrylsäureester; stereoreguläre Polypropylen, PropylenCopolymere mit mindestens einem Olefin; natürliche oder synthetische *cis*-Polyisoprene, natürliche oder synthetische *trans*-Polyisoprene, Polybutadiene mit verschiedenen Anteilen an *trans*- und *cis*-Einheiten, amorphe statistische Copolymere Ethylen/Propylen, amorphe statistische Copolymere Ethylen/Propylen/Diene, statistische Butadien/Styrol Copolymere, Styrol-Butadien-Styrol-Blockcopolymere, Styrol-Isopren-Styrol-Blockcopolymere, Styrol-Ethylen/Buten-Styrol-Blockcopolymere und Mischungen davon.

8. Hülle nach Anspruch 1, wobei die mindestens eine Adhäsionsschicht mindestens 15% mindestens eines funktionalisierten, überwiegend Kohlenwasserstoff(co)polymers und höchstens 85% mindestens einer der Komponenten ausgewählt aus nichtfunktionalisierte thermoplastische (co)Polymere und niedermolekulare organische Substanzen oder Mischungen davon enthält.

9. Hülle nach Anspruch 8, wobei die mindestens ein nicht funktionalisierte thermoplastisches (Co)Polymer ausgewählt ist aus überwiegend Kohlenwasserstoff(co)polymere ausgewählt aus LDPE, HDPE, überwiegenden Ethylenanteil aufweisende lineare Copolymere von Ethylen mit $\alpha$-Olefine mit 3 bis 12 Kohlenstoffatomen, überwiegenden Ethylenanteil aufweisende Copolymere von Ethylen mit mindestens einem ungesättigten Monomer, ausgewählt aus Vinylacetat, (Meth)acrylsäureester und aliphatischen Alkoholen, stereoreguläres Polypropylen, Propylencopolymere mit mindestens einem Olefin, Naturkautschuk, synthetischer Isoprenkautschuk, synthetischer Butadienkautschuk, Butadien-Styrol-Kautschuk, Ethylen/Propylen/Dien-Kautschuk, natürliche Guttapercha, synthetische Guttapercha, thermoplastisches Styrol-Butadien-Styrol-Elastomer, thermoplastisches Styrol-Isopren-Styrol Elastomer, thermoplastisches Styrol-Ethylen/Buten-Styrol-Elastomer; sowie Heteroketten(co)polymere mit einem Gesamtmolekulargewicht von mehr als 10 kDa, aufweisende Homopolymerketten mit Molekulargewicht vorzugsweise mindestens 0,6 kDa von mindestens einem Polymer ausgewählt aus Polyethylenoxid, Polytetrahydrofuran, Poly/Oligo-$\varepsilon$-Caprolacton.

10. Hülle nach Anspruch 9, wobei Heteroketten(co)polymere ausgewählt sind aus mindestens einem der Polymertypen, u.a. Homopolymeren und Block-Copolymeren, die zusätzlich Blöcke aus mindestens einer Polymerklasse umfassen, ausgewählt aus Polyamide, Polyester und Polyurethane.

11. Hülle nach Anspruch 8, wobei die mindestens eine niedermolekulare Substanz aus der Gruppe ausgewählt ist aufweisend Alkane mit mindestens 15 Kohlenstoffatomen, Petroleum- oder Mineralwachse, natürliche Wachse, synthetische Wachse, aliphatische Alkohole mit mindestens 11 Kohlenstoffatomen, lineare Fettsäuren mit mindestens 8 Kohlenstoffatomen, synthetische Fettsäureester, synthetische Fettsäureamide, Fettsäuremonoglyceride, Fettsäurediglyceride, Fettsäuretriglyceride, (co)Oligomere mit Gesamtmolekulargewicht von weniger als 10 kDa, umfassend homooligomere Ketten aus mindestens einem Oligomer mit dem Molekulargewicht vorzugsweise mindestens 0.6 kDa, ausgewählt aus Polyethylenoxid, Polytetrahydrofuran, Poly-s-Caprolacton, oder eine beliebige Mischung davon.

12. Hülle nach Anspruch 1, wobei die Hülle mindestens eine zusätzliche Polymerschicht aufweist, die kein funktionalisiertes vorwiegend Kohlenwasserstoff(co)polymer umfasst.

13. Hülle nach Anspruch 12, wobei die mindestens eine Zusatzschicht überwiegend aus mindestens einem nichtfunktionalisierten überwiegend Kohlenwasserstoff(co)polymer besteht und an mindestens einer Klebstoffschicht angrenzt.

14. Hülle nach Anspruch 12, wobei die mindestens eine Zusatzschicht mindestens eine weitere niedermolekulare organische Substanz enthält, ausgewählt aus Alkanen mit 15-40 Kohlenstoffatomen, Erdöl- oder Mineralwachsen, natürlichen Wachsen, aliphatischen Alkoholen mit mindestens 11 Kohlenstoffatomen, lineare gesättigte Fettsäuren mit 8-26 Kohlenstoffatomen, monoungesättigte Fettsäuren mit 19-22 Kohlenstoffatomen, synthetische Fettsäureester, synthetische Fettsäureamide, Monoglyceride von Fettsäuren, Diglyceride von Fettsäuren, Triglyceride von Fettsäuren oder Mischungen davon.

15. Hülle nach Anspruch 12, wobei die mindestens eine Zusatzschicht überwiegend aus mindestens einer Substanz besteht ausgewählt aus alkohollöslichen nichtthermoplastischen Copolyamide, Celluloseester, thermoplastischen Poly-s-Caprolacton, Block-Copolymere mit harten Blöcken aus mindestens einem Polymer, ausgewählt aus Polyamide, Polyester und Polyurethane, und mit weichen Blöcken aus mindestens einem Polymer, ausgewählt aus aliphatischen (Co)Polyether, Poly-s-Caprolacton-Diol und Polysiloxane, Polyethylenoxid mit Molekulargewicht von mehr als 10 kDa, sowie wasserlösliche (Co)Polymere, insbesondere Polyethylenoxid, Polyvinylalkohol, Polyvinylpyrrolidon, Celluloseether oder Mischungen davon.

16. Hülle nach Anspruch 1 oder Anspruch 12, wobei jede Schicht höchstens 15% mindestens eines Additivs enthält ausgewählt aus Vernetzungsmittel, Antioxidantien, Weichmacher, Pigmente, Farbstoffe, Verstärkungsmittel, Mattierungsmittel, Gleitmittel, feine und grobe Füllstoffe und Antiblockmittel.

17. Hülle nach Anspruch 1, wobei die Hülle 2 bis 7 Schichten aufweist, wobei die Gesamtdicke von 15 bis 50 $\mu$m beträgt und die Dicke der Klebstoffschicht von 0,5 bis 20 $\mu$m beträgt.

18. Hülle nach Anspruch 1 oder Anspruch 12, wobei die Hülle mindestens eine schmelzextrudierte Schicht aufweist und mindestens eine der Schichten eine Deckungsschicht ist.

19. Geräuchertes Lebensmittelprodukt, wobei das Lebensmittelprodukt in der Hülle gemäß einem der Ansprüche 1 bis 18 zubereitet und gelagert wird, wobei das geräucherte Lebensmittelprodukt eine Wurst, ein Frankfurter, ein Wienerwürstchen, ein Schinken oder Schmelzkäse ist.

**Revendications**

1. Une enveloppe pour le fumage et le stockage de produits alimentaires, l'enveloppe étant un film multicouche ayant au moins une couche thermoplastique contenant un polyamide et au moins une couche adhésive comprenant un (co)polymère fonctionnalisé principalement hydrocarboné, ledit (co)polymère fonctionnalisé principalement hydrocarboné comprenant la fraction molaire totale prédominante d'unités monomères hydrocarbonées insaturées et ayant des groupes fonctionnels capables de réagir avec au moins un groupe choisi parmi le groupe aminé primaire, le groupe carboxyle et le groupe hydroxyle, dans laquelle chaque couche contenant un polyamide est faite d'une composition comprenant:

a) 5 à 95 % d'au moins un (co)polyamide et

b) 95 à 5 % d'au moins un polymère choisi parmi les (co)polymères thermoplastiques insolubles dans l'eau à 20°C mais hautement perméables à la vapeur d'eau choisis parmi esters de cellulose thermoplastiques, copolymères à blocs de (co)polyester aliphatique et (co)polyéther aliphatique, copolymères à blocs de polyuréthane et (co)polyéther aliphatique, dans lesquels les unités répétitives du bloc de (co)éther aliphatique comprennent 2 à 4 atomes de carbone, ainsi que leurs mélanges; et parmi les (co)polymères hydrosolubles à 20°C choisis parmi alcool polyvinylique, polyvinylpyrrolidone, polyoxazoline, éthers de cellulose, amidon hydrosoluble, amidon modifié, dextrine, ainsi que leurs mélanges,

laquelle enveloppe **caractérisée par** un perméabilité à la vapeur d'eau, mesuré selon la norme DIN 53122 à 23°C et HR 85%, inférieur à 100 g/(m$^2$ jour) et par un perméabilité à la vapeur d'eau au moins 4000 g/(m2 jour) mesuré par une méthode similaire à "Desiccant Method" selon ASTM E96, mais réalisée à une humidité relative ambiante 100% et à une température 80°C.

2. Enveloppe selon la revendication 1, ladite enveloppe etant **caractérisée par** le rapport $W_{80}/W_6$, où $W_{80}$ est la perte de poids de saucisse dans cette enveloppe lors d'un traitement thermique, comprenant un séchage à 80°C et une HR 20% pendant 40 min, et $W_6$ est la perte de poids de la saucisse dans la même enveloppe pendant le stockage de la saucisse à 6°C pendant 10 jours, ledit rapport est compris au moins 0.6, de préférence au moins 0.7 et de manière la plus préférée au moins 0.8.

3. Enveloppe selon la revendication 1, dans laquelle le (co)polyamide est choisi parmi PA 46, PA 6, PA 66, PA 9, PA 12, PA 4/6, PA 46/6, PA 6/66, PA 6/66/12 et leurs mélanges.

4. Enveloppe selon les revendications 1 à 3, dans laquelle ladite couche contenant du polyamide comprend en outre des copolymères à blocs de polyamide et de (co)polyéther aliphatique.

5. Enveloppe selon la revendication 1, dans laquelle au moins une couche adhésive comprend non moins que 15% d'au moins un (co)polymère fonctionnalisé principalement hydrocarboné et ledit (co)polymère fonctionnalisé principalement hydrocarboné est un produit de copolymérisation d'hydrocarbures insaturés avec au moins un monomère fonctionnel insaturé choisi parmi acides carboxyliques insaturés, esters glycidyliques des acides carboxyliques insaturés, anhydrides d'acides carboxyliques insaturés, et éventuellement avec au moins un monomère choisi parmi esters vinyliques, esters d'acides carboxyliques insaturés, amides d'acides carboxyliques insaturés, ainsi que leurs mélanges.

6. Enveloppe selon la revendication 1, dans laquelle au moins une couche adhésive comprend non moins que 15% d'au moins un (co)polymère fonctionnalisé prédominante hydrocarboné et ledit (co)polymère fonctionnalisé principalement hydrocarboné est un produit de greffage de (co)polymère principalement hydrocarboné d'au moins un monomère fonctionnel insaturé choisi parmi acides carboxyliques insaturés, amides d'acides carboxyliques insaturés, esters glycidyliques d'acides carboxyliques insaturés, anhydrides d'acides carboxyliques insaturés, ainsi que leurs mélanges.

7. Enveloppe selon la revendication 6, dans laquelle les (co)polymères principalement hydrocarbonés sont choisis parmi LDPE, HDPE, copolymères linéaires d'éthylène avec $\alpha$-oléfines comprenant 3 à 12 atomes de carbone à teneur prédominante en éthylène, les copolymères d'éthylène à teneur prédominante en éthylène avec au moins un monomère insaturé choisis parmi acétate de vinyle, acide (méth)acrylique, esters d'acide (méth)acrylique; polypropylène stéréorégulier, copolymères de propylène avec au moins une oléfine; *cis*-polyisoprènes naturels ou synthétiques, *trans*-polyisoprènes naturels ou synthétiques, polybutadiènes avec différentes fractions d'unités *trans*- et *cis*-, copolymères statistiques amorphes éthylène/propylène, copolymères statistiques amorphes éthylène/propylène/dién, copolymères statistiques butadiène/styrène, copolymères séquencés styrène-butadiène-styrène, copolymères séquencés styrène-isoprène-styrène, copolymères séquencés styrène-éthylène/butène-styrène, ainsi que leurs mélanges.

8. Enveloppe selon la revendication 1, dans laquelle au moins une couche adhésive comprend non moins que 15% d'au moins un (co)polymère fonctionnalisé principalement hydrocarboné et au plus 85% d'au moins un composant choisi parmi des (co)polymères thermoplastiques non-fonctionnalisés et des substances organiques de faible masse moléculaire, ainsi que leurs mélanges.

**9.** Enveloppe selon la revendication 8, dans laquelle au moins un (co)polymère thermoplastique non fonctionnalisé est choisi parmi (co)polymères principalement hydrocarbonés, choisis parmi LDPE, HDPE, copolymères linéaires d'éthylène et des α-oléfines comprenant 3 à 12 atomes de carbone, avec une teneur prédominante en éthylène, les copolymères, avec une teneur prédominante en éthylène, d'éthylène et au moins un monomère insaturé choisi parmi acétate de vinyle, esters d'acide (méth)acrylique et d'alcools aliphatiques, polypropylène stéréorégulier, copolymères de propylène avec au moins une oléfine, caoutchouc naturel, caoutchouc isoprène synthétique, caoutchouc butadiène synthétique, caoutchouc butadiène-styrène, caoutchouc éthylène-propylène-diène, gutta-percha naturelle, gutta-percha synthétique, élastomère thermoplastique styrène-butadiène-styrène, élastomère thermoplastique styrène-isoprène-styrène, élastomère thermoplastique styrène-éthylène-butène-styrène; ainsi que (co)polymères hétérochaînes avec le poids moléculaire total supérieur à 10 kDa, comprenant des chaînes homopolymères avec le poids moléculaire de préférence au minimum 0.6 kDa d'au moins un polymère choisi parmi oxyde de polyéthylène, polytétrahydrofurane, poly/oligo-ε-caprolactone.

**10.** Enveloppe selon la revendication 9, dans laquelle les (co)polymères hétérochaînes sont choisis parmi au moins un type de polymères, notamment homopolymères et copolymères à blocs, comprenant en outre des blocs d'au moins une des classes de polymères choisis parmi polyamides, polyesters et polyuréthanes.

**11.** Enveloppe selon la revendication 8, dans laquelle ladite au moins une substance organique de faible masse moléculaire est choisie parmi alcanes avec au minimum 15 atomes de carbone, cires de pétrole ou minérales, cires naturelles, cires synthétiques, alcools aliphatiques avec au minimum 11 atomes de carbone, acides gras linéaires avec au minimun 8 atomes de carbone, ester synthétique d'acides gras, amides synthétiques d'acides gras, monoglycérides d'acides gras, diglycérides d'acides gras, triglycérides d'acides gras, (co)oligomères de poids moléculaire total inférieur à 10 kDa, comprenant des chaînes homooligomères composés d'au moins un oligomère de poids moléculaire de préférence au minumum 0,6 kDa, choisi parmi oxyde de polyéthylène, polytétrahydrofurane, poly-ε-caprolactone, ainsi que leurs mélanges.

**12.** Enveloppe selon la revendication 1, **caractérisée en ce qu'**elle comporte au moins une couche polymérique supplémentaire, ne comprenant aucun (co)polymère fonctionnalisé principalement hydrocarboné.

**13.** Enveloppe selon la revendication 12, dans laquelle au moins une couche supplémentaire est majoritairement composée d'au moins un (co)polymère non-fonctionnalisé principalement hydrocarboné et présente une interface avec au moins une couche adhésive.

**14.** Enveloppe selon la revendication 12, dans laquelle au moins une couche supplémentaire comprend en outre au moins une substance organique de bas poids moléculaire, choisie parmi alcanes avec 15-40 atomes de carbone, cires de pétrole ou minérales, cires naturelles, alcools aliphatiques avec au minimum 11 atomes de carbone, acides gras saturés linéaires avec 8-26 atomes de carbone, acides gras monoinsaturés avec 19-22 atomes de carbone, ester synthétique d'acides gras, amides synthétiques d'acides gras, monoglycérides d'acides gras, diglycérides d'acides gras, triglycérides d'acides gras, ainsi que leurs mélanges.

**15.** Enveloppe selon la revendication 12, dans laquelle au moins une couche supplémentaire est majoritairement composée d'au moins un composant choisi parmi copolyamides non thermoplastiques solubles dans l'alcool, esters de cellulose, poly-ε-caprolactone thermoplastique, copolymères à blocs ayant des blocs durs d'au moins un polymère choisi parmi polyamides, polyesters et polyuréthanes, et des blocs mous d'au moins un polymère choisi parmi (co)polyéthers aliphatiques, poly-ε-caprolactone-diol et polysiloxanes, oxyde de polyéthylène d'un poids moléculaire supérieur à 10 kDa, ainsi que des (co)polymères hydrosolubles, notamment l'oxyde de polyéthylène, l'alcool polyvinylique, la polyvinylpyrrolidone, les éthers de cellulose, ainsi que leurs mélanges.

**16.** Enveloppe selon la revendication 1 ou 12, dans laquelle l'une quelconque de ses couches comprend au plus 15% d'au moins un additif choisi parmi agents de réticulation, antioxydants, plastifiants, pigments, colorants, agents de renforcement, agents de matage, agents de glissement, charges fines et grossières et agents antiblocage.

**17.** Enveloppe selon la revendication 1, **caractérisé en ce qu'**elle comporte 2 à 7 couches avec l'épaisseur totale de 15 à 50 μm, et l'épaisseur de la couche adhésive est compris de 0,5 à 20 μm.

**18.** Enveloppe selon la revendication 1 ou 12, ladite enveloppe comportant au moins une couche extrudée par fusion, et au moins une couche étant un revêtement.

19. Produit alimentaire fumé, le produit alimentaire étant préparé et stocké dans l'enveloppe selon l'une quelconque des revendications 1 à 18, dans lequel ledit produit alimentaire fumé est une saucisse, une saucisse de Francfort, une saucisse de Vienne, un jambon ou un fromage fondu.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0139888 B1
- EP 0139888 A
- RU 2182107
- US 8012552 B
- DE 10323417
- US 4243074 A
- US 5185189 A
- US 5837358 A
- EP 0797918 A
- US 2005112247 A1
- DE 10320327 A1
- US 2011300273 A1
- US 2012003361 A1
- EP 0920808 A
- RU 2469541
- US 6764753 B
- DE 10320327
- US 5106677 A
- US 5155160 A
- DE 4017046
- US 8226457 B
- US 6299917 B